# EUROPÄISCHE PATENTSCHRIFT

(11) **EP 1 446 999 B1**
(45) Veröffentlichungstag und Bekanntmachung des Hinweises auf die Patenterteilung: **24.12.2008**
(21) Anmeldenummer: 03003034.0
(22) Anmeldetag: 12.02.2003
(51) Int. Cl.: A01G 7/00, A01G 7/04

(54) **Verfahren zur Diagnose von Pflanzenmaterialzuständen**
Method for diagnosis of the status of plantmaterial
Procédé de diagnose d'état des matières végétales

(43) Veröffentlichungstag der Anmeldung: 18.08.2004
(73) Patentinhaber: LEHNER GmbH SENSOR-SYSTEME, 73230 Kirchheim/Teck (DE)
(72) Erfinder: Wagner, Edgar, 79283 Bollschweil (DE); Lehner, Lars, 79115 Freiburg (DE)
(74) Vertreter: Stürken, Joachim

(56) Entgegenhaltungen:
- DE-A- 3 722 516
- DE-A- 4 331 985
- FR-A- 2 638 936
- GB-A- 2 016 884
- SU-A- 1 202 524
- US-A- 2 332 164
- US-A- 5 819 467
- ADAMEC L., ET AL: "Eletric Current Inhibits Flowering in the Short-Day Plant Chenopodium rubrum L." JOURNAL OF PLANT PHYSIOLOGY, Bd. 134, 1989, Seiten 43-46, XP001153524 Stuttgart

## Beschreibung

Die vorliegende Erfindung betrifft allgemein das Gebiet der Land- und Forstwirtschaft sowie der Hortikultur. Insbesondere betrifft die Erfindung Verfahren zur Überwachung, Diagnose und Manipulation von pflanzlichen Materialien, die auf der Ableitung elektrophysiologischer Daten oder der Applikation entsprechender Reize basieren.

Bekanntlich unterliegt jede Aussaat, Aufzucht, Kultivierung und Ernte pflanzlicher Materialien einer Vielzahl von endogenen und exogenen Parametern, deren optimales Zusammenwirken zur Sicherstellung eines hohen Ertrages unentbehrlich ist.

Folglich sind zahlreiche Anstrengungen unternommen worden, um die Relevanz der Kulturbedingungen wie insbesondere Licht, Temperatur und Nährstoffangebot zu erforschen. Parallel hierzu wurde pflanzliches Material verschiedenen physiologischen und molekularbiologischen Untersuchungen zugeführt mit dem Ziel, die zumeist äußerst komplexen Regelkreise und Metabolismen innerhalb einer Pflanze besser verstehen zu können.

Beispielsweise wurde gefunden, dass die Regelmäßigkeit der wiederkehrenden Umweltbedingungen die Organismen in die Lage versetzt, sich adaptiv auf zukünftige abiotische und biotische Gegebenheiten wie z.B. die jahreszeitlichen Änderungen des Lichtangebotes vorzubereiten.

Aufgrund der Erdrotation und der Neigung der Erdachse bezüglich ihrer Bahnebene variiert die Tageslichtlänge über das Jahr hinweg für jede geographische Breite in einer charakteristischen Art und Weise. Tiere und Pflanzen nutzen die jahreszeitlichen Änderungen des Lichtangebotes als "Zeitgeber" und koordinieren auf diese Weise unterschiedliche physiologische Vorgänge. So sind z.B. die Aktivitätsphasen der Organismen meist in der Sommerzeit, die Ruhephasen in der Winterzeit angelegt. Führen unterschiedliche Tageslichtlängen zu Veränderungen im Entwicklungsprogramm der Organismen, so unterliegen die betroffenen physiologischen Vorgänge der sogenannten photoperiodischen Steuerung. Bei Pflanzen fallen z.B. die Samenreifung, die Bildung von Speicherstoffen, die Knospenruhe, die Ausbildung von Frostresistenz, die Abscission von Blättern und Früchten sowie die Festlegung des Zeitpunktes, zu dem die Pflanze aus dem vegetativen in das reproduktive Wachstum übergeht unter die Kontrolle der photoperiodischen Steuerung.

Die im Rahmen der vorliegenden Erfindung als Beispiel für diese physiologischen Vorgänge besonders detailliert untersuchte photoperiodische Induktion der Blütenbildung beginnt mit der Perzeption der blühinduzierenden Photoperiode in den Blättern, der Ausbildung eines Blühstimulus und dessen Transport aus den Blättern hin zu den Apikalmeristemen. Dort führt der eintreffende Blühstimulus zur Umsteuerung vom vegetativen zum reproduktiven Wachstum und zur Ausbildung der Blütenanlagen.

Neben den zahlreichen Modellen, die den Transport eines chemischen Blühstimulus zwischen den Blättern und dem Apex als Blühsignal favorisieren, wurde die Hypothese der elektrischen Signalübertragung entwickelt (Wagner *et al.,* 1993, 1998; Davies *et al.,* 1991), wobei vermutet wird, dass die Perzeption der blühinduzierenden Photoperiode zu einer Veränderung des frequenzcodierten elektrochemischen Signalaustauschs zwischen den Blattorganen und den Sprossscheitelpunkten führt (Wagner *et al.*, 1998). Das Prinzip der bioelektrischen Signalübertragung ist Grundlage der vorliegenden Erfindung und wird nachfolgend ausführlicher dargestellt.

Elektrische Aktivitäten konnten bereits bei einer Vielzahl von Pflanzen nachgewiesen werden. Sie finden sich nicht nur bei Pflanzen, die sich durch rasche Bewegungserscheinungen auszeichnen (z.B. *Dionea muscipula, Mimosa pudica*), sondern u.a. im Zusammenhang mit Wundantworten bei Pflanzen wie z.B. *Phaseolus, Helianthus, Vicia, Pisum* und *Lycopersicum* (Pickard, 1973). Aktionspotentiale (APs) im pflanzlichen System ähneln im Kurvenverlauf der Form neuronaler Signale. Im Unterschied zum tierischen System sind ihre Ausbreitungsgeschwindigkeiten allerdings um den Faktor 10³ geringer, zeigen aber deutlich größere Amplituden.

Pflanzliche Zellen können auf elektrische, chemische und/oder mechanische Reize mit der Verlagerung von Ionen über den Symplast bzw. Apoplast oder andere cytoplasmatische Membranen (z.B. Tonoplast) reagieren. Dazu muss zunächst das Rezeptorpotential durch einen adäquaten Reiz soweit angehoben werden, bis die Reizschwelle überschritten wird. Die in Folge von überschwelligen Reizen auftretenden Veränderungen des elektrischen Potentials können zu Verschiebungen des Ruhepotentials (RP), zu rhythmischen Änderungen der Lage des Ruhepotentials (rhythmic elctrical activity, REA) (Davies *et al.,* 1991) oder zur Ausbildung von Variations- (VP) bzw. Aktionspotentialen (AP) führen. Diese elektrischen Signale können mit geeigneten Messmethoden sowohl intra- als auch extrazellulär abgeleitet werden. Veränderungen des Membranpotentials hin zu positiveren Werten werden als Depolarisation, im umgekehrten Fall als Hyperpolarisation bezeichnet.

Aktionspotentiale (APs) sind bei verschiedenen Pflanzenarten auf Zell- und Gewebsniveau nachweisbar. Ihre physiologische Bedeutung ist aber noch weitgehend ungeklärt. Die Auflistung einiger weniger Beispiele bekannter physiologischer Aktivitäten von APs soll das große Wirkungsspektrum elektrochemischer Signale bei Pflanzen verdeutlichen:
- Bei *Characean*-Zellen führen APs, die z.B. in Folge von mechanischen Verletzungen nachgewiesen werden können, zum Einstrom von Ca²⁺ in den Protoplasten, wodurch eine Proteinkinase aktiviert wird. Diese Proteinkinase verhindert die Interaktion von Aktin und Myosin, und das als Cyklose bekannte intrazelluläre cytoplasmatische Strömen kommt so lange zum Erliegen, bis das AP abgeklungen ist. Da das Cytoplasma zeitgleich gelartige Konsistenz annimmt, wird vermutet, dass es sich bei den durch APs getriggerten Vorgängen um einen Schutzmechanismus handelt, der das Ausströmen von Protoplasma aus mechanisch verletzten Zellen verhindert (Wayne, 1993).
- Aktionspotentiale steuern die schnellen Blattbewegungen z.B. bei *Dionea muscipula, Mimosa pudica* und *Aldrovanda vesiculosa.*
- Aktionspotentiale, die in den Wurzeln von *Salix viminalis* L. nach chemischer Stimulation generiert werden und sich über den Kormus ausbreiten, beeinflussen Transpiration und Photosynthese (Fromm & Eschrich., 1993).
- An Tomatenpflanzen konnte gezeigt werden, dass lokale Gewebsverletzungen, wie sie z.B. als Fraßschäden durch Insekten hervorgerufen werden, zur Ausbildung von Aktionspotentialen führen. Diese wiederum bewirken eine systemische Genaktivierung und Immunisierung der Pflanze (Wildon, 1992). Vergleichbares ist von HERDE mit mechanischen Verletzungen und nach der Applikation von Hitzereizen an Tomatenpflanzen gezeigt worden (Herde, 1995).

Ferner treten Aktionspotentiale beispielsweise im Zusammenhang mit dem Phloemtransport, dem Längenwachstum, der Wasseraufnahme, dem Gaswechsel, und bei der Bestäubung auf.

APs entstehen nicht nur in Folge der Einwirkung von äußeren Triggerreizen (z.B. Hitze, Berührung), sondern lassen sich auch als sogenannte spontane APs (*spontaneous action potentials,* SAPs) im nicht erregten Zustand der Pflanze nachweisen. Von DAVIES *et al.* durchgeführte Ableitungen von SAPs mit in die Sprossachse eingestochenen Elektroden belegen für Sonnenblumen die Existenz von sich basipetal ausbreitenden SAPs (Davies *et al.,* 1991).

Aktionspotentiale sind außer in Zellverbänden und spezialisierten Geweben auch in pflanzlichen Einzelzellen nachweisbar, z.B. in den Drüsenhaaren von *Drosera.* Untersuchungen an der Algenzelle *Chara* (s.o.) zeigen ferner, dass auch Einzelzellen die Fähigkeit zur Generierung von Aktionspotentialen besitzen.

Die Fähigkeit von Pflanzenzellen zur Generierung elektrischer Signale und zur Weiterleitung derselben als physiologisch aktive Signale über größere Distanzen ist demnach nicht an die Existenz spezifischer Leitbahnen oder Gewebe gebunden, wie sie z.B. aus dem neuronalen Netz höher entwickelter Tiere bekannt sind. Vielmehr basiert im pflanzlichen System die elektrochemische Signalübertragung auf der Grundstruktur lebender pflanzlicher Zellen. So sind elektrisch isolierende Membranen, ionenselektive Kanäle und Plasmodesmen Bestandteil nahezu jedes Zelltyps. Die elektrische Kopplung der einzelnen Zellen untereinander durch die zahlreich ausgebildeten Plasmodesmen schafft einen komplexen, elektrosensiblen Pflanzenkormus, der einen hohen elektrischen Informationsaustausch zwischen den einzelnen Pflanzenorganen ermöglicht. Die Übertragungsgeschwindigkeiten elektrischer Signale bei Pflanzen fallen mit < 200 mm/sec deutlich langsamer aus als die Signalgeschwindigkeiten bei höheren Tieren, die bis zu 100 m/sec erreichen können.

Das Variationspotential (VP), das auch als *graded potential* oder *slow wave* bezeichnet wird, unterscheidet sich in Form und physiologischer Bedeutung klar von den Aktionspotentialen (APs) (Davies *et al.,* 1991). So zeigen VPs zwar eine den APs entsprechende schnelle Depolarisation, die Rückkehr zum Ruhepotential erfolgt im Unterschied zum AP aber wesentlich langsamer.

Während APs eine entscheidende Rolle bei der elektrischen Signalübertragung über größere Distanzen besitzen, sind VPs in ihrer Ausbreitung lokal begrenzt und haben einen starken steuernden Einfluss auf das Gewebe, in dem sie sich ausbreiten. Bei einer Vielzahl unterschiedlicher Pflanzenarten konnten VPs nachgewiesen werden. Sie können durch unterschiedlicher Reize, wie z.B. nach Licht- und Gravistimulation, Gewebsverletzungen, osmotischem Stress, Änderungen des Xylemdrucks, Abkühlung und Auxinbehandlung ausgelöst werden. Die Ausbreitungsgeschwindigkeiten von VPs liegen zwischen 0,1 bis 10 mm/sec. Allgemein gilt als anerkannt, dass VPs keine pflanzlichen elektrischen Signale sind, die sich selbst erhaltend über große Entfernungen entlang des Pflanzenkormus ausbreiten.

Einen Hinweis auf die Existenz eines durch Licht hervorgerufenen elektrochemischen Signalaustauschs zwischen den Blättern und der Sprossachse liefert der Nachweis licht-induzierter elektrischer Potentialänderungen. Derartige Potentialänderungen konnten bereits für verschiedene Pflanzen unterschiedlicher taxonomischer Gruppen einschließlich *Conocephalum, Salix, Spinacia, Cucurbita, Arabidopsis* und *Chenopodium* nachgewiesen werden. Die Beteiligung des Photosyntheseapparats an der Verschiebung des elektrischen Ruhepotentials konnte von ZIVANOVIC *et al.* (1992) für *Chenopodium rubrum* klar gezeigt werden. Sie konnten zeigen, dass bei photogebleichten Pflanzen mit geschädigtem Photosyntheseapparat keine Änderung des Ruhepotentials im Licht-Dunkel-Wechsel auftreten und lieferten so den Beweis der direkten Kopplung zwischen Photoperiode und der elektrochemischen Signalerzeugung.

Erste Hinweise auf die Bedeutung von Aktionspotentialen im Zusammenhang mit der photoperiodischen Induktion der Blütenbildung liefern die von DAVIES *et al.* durchgeführten elektrophysiologischen Ableitungen an Sonnenblumen. Sie konnten beobachten, dass bei vegetativ wachsenden Pflanzen Aktionspotentiale ausschließlich während der Dunkelphasen auftreten (Davies *et al.,* 1991). Von ADAMEC durchgeführte Experimente an *Chenopodium rubrum* deuten auf eine Hemmung des Transports des blühinduzierenden Stimulus durch elektrischen Gleichstrom (DC) hin. Aus seinen auf der "Florigen-Hypothese" (s.o.) aufbauenden Experimenten wurde phänotypisch geschlossen, dass der vermutete Transport der hypothetischen chemischen Verbindung (en) aus den photoperiodisch induzierten Blättern hin zum Sprossscheitelpunkt durch negative Ladungen eines über die Pflanze fließenden konstanten elektrischen Gleichstroms von 6 µA (DC) unterdrückt und die Blütenbildung trotz induzierender Photoperiode inhibiert werden kann (Adamec *et al.,* 1989).

Vergleichbare Konzepte der bioelektrischen Signalübertragung bei Pflanzen werden auch im Zusammenhang mit der systemischen Wundreaktion bei Pflanzen diskutiert. So konnte WILDON zeigen, dass mit der mechanischen Verletzung eines Kotyledons einer Tomatenpflanze elektrische Signale in Form von Aktionspotentialen ausgelöst werden, die sich über den Kormus ausbreiten und zur Aktivierung von *pin II Genen (proteinase inhibitor genes*) am Ort der Verletzung, sowie systemisch in der ganzen Pflanze führen (Wildon *et al.,* 1992).

Obwohl etliche Arbeiten veröffentlicht worden sind, deren Inhalte zu einem besseren Verständnis der physiologischen Reaktionen einer Pflanze auf exogene Reize beigetragen haben, ist über die konkrete Relevanz und Nutzbarkeit elektrophysiologischer Daten zu diagnostischen und manipulativen Zwecken jedoch nach wie vor nur wenig bekannt.

Die der vorliegenden Erfindung zugrunde liegende Aufgabe besteht daher in der Bereitstellung von Verfahren zur Überwachung, Diagnose und/oder Manipulation bestimmter Zustände in pflanzlichen Materialien.

Ein Teil dieser Aufgabe wird erfindungsgemäß gelöst durch Bereitstellung eines Verfahrens zur Überwachung oder Diagnose von Pflanzenmaterialzuständen auf der Basis elektrophysiologischer Daten durch Ermittlung von Veränderungen des elektrischen Potentials im Pflanzenmaterial und Auswertung der somit erhaltenen Daten, wobei die Ermittlung der Potentialveränderungen nach einer bevorzugten Ausführungsform durch Elektrodenableitung erfolgt.

Die der vorliegenden Erfindung zugrunde liegende Erkenntnis, wonach verschiedene Zustände und Zustandsveränderungen pflanzlichen Materials durch spezifische elektrophysiologische Aktivitätsmuster charakterisiert werden können, ist in vielen Bereichen nutzbar und ermöglicht die Bereitstellung von Verfahren, mit denen pflanzliches Material hinsichtlich dieser Zustände sowohl überwacht als auch manipuliert werden kann.

Sämtliche Zustände, die erfindungsgemäß erfasst oder gesteuert werden können, basieren auf der Reaktion pflanzlichen Materials auf externe Standortfaktoren, denen das Material während seiner Keimung, Aufzucht, Kultivierung und/oder Ernte dauerhaft oder temporär ausgesetzt ist bzw. sein kann. Diese insbesondere auf Wachstum und Entwicklung wirkenden Außenfaktoren sind exogene Signale, die sich u.a. aus den Ernährungsbedingungen, der Wasserversorgung sowie den Temperatur- und Lichtbedingungen herleiten und im Rahmen der genetischen Potenz oder der Reaktionsnorm des Materials nach den Grundsätzen der Heteromorphose festlegen, wie groß und wie alt z.B. eine Blütenpflanze wird und wann die irreversible Umsteuerung von der vegetativen zur reproduktiven Entwicklung bei ihr erfolgt, auch wie viele Blüten, Pollen und Samen sie schließlich hervorbringt. Neben Licht, Wärme und Wasser umfassen derartige Faktoren auch chemische Variable wie z.B. Kohlendioxid- und Sauerstoffspannung, pH-Wert, Nährstoffe, Spurenelemente, Salzkonzentration, Giftstoffe usw., und mechanische Faktoren wie z.B. Beschädigung durch Verbiss, Schnitt o.ä., Schneelast, Wind, Feuer und Raumeinengung. Im Rahmen der vorliegenden Erfindung umfassen die überwachbaren, diagnostizierbaren und/oder manipulierbaren Zustände daher alle Vorgänge und Phasen sowie Stadien aus dem Lebenszyklus eines pflanzlichen Materials, die durch Einwirkung von Standortfaktoren gesteuert werden und mit spezifischen elektrophysiologischen Daten oder Aktivitätsmustern korrelieren, welche mittels Elektrodenableitung erfasst, aufgezeichnet und ausgewertet werden können.

Für die Messung bzw. Ermittlung der elektrophysiologischen Daten können grundsätzlich sowohl invasive als auch nicht-invasive Ableittechniken angewendet werden.

Die Frage nach dem Einfluss der Ableittechnik auf die dargestellte Signalform wurde bereits an *Bidens pilosus* mit Hilfe von Vergleichsmessungen mit intra- und extrazellulären Elektroden untersucht (Frachisse-Stoilskovic & Julien, 1993). Diese Arbeit zeigt, dass intra- und extrazelluläre Ableitungen zu identischen Signalformen führen. Allerdings muss bei dem Einsatz von Oberflächenelektroden gegenüber intrazellulären Ableitung mit einem Verlust in der Signalamplitude zwischen 50% und 80% gerechnet werden, was für die erfolgreiche Anwendung der erfindungsgemäßen Verfahren jedoch ohne Bedeutung ist.

Zahlreiche Literaturangaben und die Ergebnisse eigener Untersuchungen belegen, dass Gewebsverletzungen, wie sie durch Verwendung von Einstechelektroden im Rahmen einer invasiven Ableittechnik hervorgerufen werden, zur Ausbildung von Wundreaktionen bei Pflanzen führen, die auch elektrische Potentialänderungen (APs und VPs) nach sich ziehen können (z.B. Wildon, 1992; Herde, 1995), weshalb nicht-invasive Methoden unter Verwendung von Oberflächenelektroden erfindungsgemäß bevorzugt sind. Da Potentialänderungen durch Verwendung von Einstechelektroden zu erwarten sind, sollten im Falle ihrer Verwendung bei der Auswertung daher nur solche Messdaten berücksichtigt werden, die nach Wiedererreichen des Ruhepotentials erfasst worden sind. Nach einer bevorzugten Ausführungsform müssen daher etwaige, durch Gewebsverletzungen hervorgerufene Potentialänderungen bei der Auswertung der Messdaten berücksichtigt werden.

Im Falle der bevorzugten Anwendung nicht-invasiver Ableittechniken sollte eine erfindungsgemäße Messanlage zur Aufzeichnung von Änderungen des elektrischen Oberflächensummenpotential vorzugsweise folgende Kriterien erfüllen:
- Die elektrischen Ableitungen von den Oberflächen des pflanzlichen Materials können automatisiert erfolgen, wodurch Störungen des Versuchsablaufs, wie sie z.B. durch das Erneuern oder Reinigen der Ableitelektroden hervorgerufen werden könnten, ausgeschlossen werden.
- Die verwendeten Oberflächenelektroden sollten keine Gewebsverletzungen verursachen. Andernfalls sollte mit der Aufzeichnung der für die Auswertung relevanten Messdaten erst nach Erreichen eines Ruhezustandes begonnen werden.
- Die verwendeten Oberflächenelektroden sollten in Abhängigkeit des vorgesehenen Messzeitraums das Längenwachstum der Versuchspflanzen nicht beeinträchtigen und dem Dilatationswachstum der Pflanzen folgen können.
- Die Aufzeichnungen des Oberflächensummenpotentials sollten an einer möglichst großen Anzahl von Versuchspflanzen parallel durchführbar sein.

Mit der erfindungsgemäß vorgeschlagenen Messvorrichtung unter der bevorzugten Verwendung von Oberflächenelektroden können in automatisierten Langzeitmessungen von bis zu 4 Wochen Dauer autonome elektrische Signale auf den Pflanzenoberflächen nachgewiesen werden, ohne dass die verwendeten Elektroden zu Gewebeverletzungen oder einer mechanischen Beanspruchung der Versuchspflanzen führen. Die Verwendung dieser nicht-invasiven Messmethode hat gegenüber Einstechelektroden den entscheidenden Vorteil, dass die nachgewiesenen elektrischen Signalmuster ausschließlich die elektrochemische Reaktion der Versuchspflanzen auf die in den Experimenten eingesetzten biotischen und abiotischen Reize widerspiegeln. Die Gefahr der Überlagerung elektrischer Signale, wie sie z.B. unter dem Einfluss der Photoperioden entstehen, mit Signalen, die durch Gewebeverletzungen (z.B. durch die Verwendung von Einstechelektroden) hervorgerufen werden, wird damit auf ein Minimum reduziert. Dieser methodische Vorteil von Oberflächenableitungen gewährleistet, dass sämtliche im Verlauf von Untersuchungen ermittelten Daten, Aktivitätsmuster bzw. -profile oder Elektrophysiogramme die ungestörte elektrophysiologische Aktivität bzw. die autonomen elektrogenen Reaktionen der Versuchspflanzen auf die gegebenen oder applizierten Außenreize wiedergeben.

Da die Signalform der elektrischen Signale von der Art der Ableitung unbeeinflusst ist, kann auch bei Messungen unter der bevorzugten Verwendung von Oberflächenelektroden zwischen verschiedenen Signalformen wie VPs und APs differenziert werden, wodurch die Datenauswertung für diagnostische oder Überwachungszwecke erheblich vereinfacht wird.

Vorzugsweise sind die im Rahmen der vorliegend beschriebenen Arbeiten eingesetzten Oberflächenelektroden derart ausgestaltet, dass der Umfang der Sprossachse oder des Blattstiels von der Elektrodenoberfläche an jedem Messpunkt im wesentlichen vollständig umschlossen wird. Hierdurch wird sichergestellt, dass im Unterschied zu intrazellularen Ableitungen oder Punktelektroden nicht die elektrische Potentialänderung von Einzelzellen, sondern die elektrochemische Aktivität eines in seiner Ausdehnung nicht näher definierten Zellverbandes erfasst wird. Aus diesem Grund werden vorliegend für die Beschreibung der mit Oberflächenelektroden abgeleiteten elektrischen Potentialänderungen die Begriffe "Oberflächensummenpotential" oder "Oberflächenpotential" verwendet.

Nach einer bevorzugten Ausführungsform besteht jede Kontaktelektrode aus einem biologisch weitgehend inerten, flexiblen Elektrodendraht, wobei die Verwendung silbergalvanisierter Kupferdrähte besonders bevorzugt ist. Die Enden der Kontaktelektroden sind zur Weiterleitung der erfassten Daten an eine Speicher- oder Auswertungseinheit mit einem Signalkabel verbunden.

Um den Übergangswiderstand zwischen Pflanzen- und Elektrodenoberfläche zu minimieren, können die Kontaktflächen der Elektroden zu Versuchsbeginn dünnflächig mit einem weitgehend inerten Kontaktgel überzogen werden. Hierfür eignet sich beispielsweise ein Gel, das in der Medizin z.B. bei EEG Untersuchungen eingesetzt wird.

Erfindungsgemäß können sowohl unipolare als auch bipolare Elektroden eingesetzt werden, wobei die Verwendung von Oberflächenelektroden besonders bevorzugt ist. Sofern z.B. aus Platzgründen nur ein Messpunkt auf der Oberfläche des pflanzlichen Materials zur Verfügung steht oder räumlich hochauflösende Ableitungen gewünscht sind, sollten vorzugsweise bipolare Elektroden eingesetzt werden.

Unabhängig von der konkreten Auswahl einer erfindungsgemäß geeigneten Ableittechnik werden die ermittelten bzw. gemessenen elektrophysiologischen Daten einer quantitativen und/oder qualitativen Auswertungseinheit zugeführt, wobei die Auswertung der ermittelten Potentialveränderungen in Abhängigkeit des Anwendungsbereichs vorzugsweise anhand der Frequenz, der zeitlichen Verteilung und/oder der Ausbreitungsrichtung von Aktionspotentialen vorgenommen wird.

Anhand von Langzeitmessungen unter Verwendung der erfindungsgemäß bevorzugten bipolaren Oberflächenelektroden konnte die spezifische Änderung der Ausbreitungsrichtung von Aktionspotentialen unter dem Einfluss verschiedener nicht-blühinduzierender und blühinduzierender Photoperioden sichtbar gemacht werden. Die Messungen haben gezeigt, dass die Ausbreitung der APs entlang der Sprossachse der untersuchten Modellpflanzen *Chenopodium rubrum* und *Chenopodium murale* durch die Photoperiode festgelegt ist und sowohl basi- (↓) als auch acropetal (↓) erfolgen kann, wobei die nachfolgend dargelegten Gesetzmäßigkeiten etabliert werden konnten.

Unter nicht-blühinduzierenden Lichtbedingungen breiten sich bei der Kurztagpflanze (KTP) *C. rubrum* 80% sämtlicher APs acropetal über die Sprossachse aus, während unter dem Einfluss blühinduzierender Photoperioden 80% der APs eine basipetale Orientierung aufweisen. Für die Langtagpflanze (LTP) *C. murale* wurde demgegenüber festgestellt, dass unter dem Einfluss blühinduzierender Photoperioden 80% der APs eine acropetale Orientierung aufweisen, während sich 80% sämtlicher APs unter nicht-blühinduzierenden Lichtbedingungen basipetal über die Sprossachse ausbreiten. Daraus folgt, dass die statistische Auswertung der Ausbreitungsrichtung der APs als Indikator für die Induktion der Blütenbildung bei Kurz- und Langtagpflanzen eingesetzt werden kann. Wird z.B. bei einer KTP festgestellt, dass sich die gemessenen APs überwiegend, d.h. zu mindestens 60%, vorzugsweise zu mindestens 70 - 80%, basipetal über die Sprossachse ausbreiten, so befindet sich diese Pflanze in der sexuellen Phase, die zunächst insbesondere durch die Blütenbildung gekennzeichnet ist. Im Falle einer LTP würden die selben Daten bedeuten, dass sich die Pflanze in der vegetativen Phase befindet.

Ausgehend von diesen Befunden kann der Blühzustand einer Pflanze daher überraschender Weise festgestellt werden, lange bevor erste morphologische Veränderungen an den kompetenten Apikalmeristemen sichtbar sind.

Die oben dargelegten Gesetzmäßigkeiten ermöglichen erfindungsgemäß ferner eine differentielle Bestimmung von KTP und LTP. Wird z.B. bei einer zu bestimmenden Pflanze unter blühinduzierenden Lichtbedingungen festgestellt, dass sich die gemessenen APs überwiegend, d.h. zu mindestens 60%, vorzugsweise zu mindestens 70 - 80%, basipetal über die Sprossachse ausbreiten, handelt es sich um eine LTP.

Weitere Versuche mit anderen Blütenpflanzen aus der Gruppe der Kurzlangtag- und Langkurztagpflanzen sowie Tagneutralen bestätigen die Eignung des Kriteriums der Ausbreitungsrichtung als Indikator für die Induktion der Blütenbildung und belegen die allgemeine Anwendbarkeit dieser Methodik.

Die im Rahmen der vorliegenden Erfindung erzielten Ergebnisse zeigen ferner, dass die zeitliche Verteilung von potentialen (APs) unter dem Einfluss nicht-blühinduzierender und blühinduzierender Photoperioden nicht gleichmäßig über die Dunkel- und Lichtphasen der verschiedenen Photoperioden erfolgt, sondern einem charakteristischen AP-Verteilungsmuster unterliegt. Diese nachgewiesenen AP-Verteilungsmuster können neben der AP-Ausbreitungsrichtung daher erfindungsgemäß als weitere frühzeitige Indikatoren für den Blühzustand bzw.-status (vegetativ oder blühinduziert) herangezogen werden.

Um die Zusammenhänge zwischen der photoperiodischen Blühinduktion als Pflanzenmaterialzustand und der zeitlichen Verteilung (Summation) von Aktionspotentialen und ihrer Ausbreitungsrichtung erfassen zu können, wurden die im Verlauf der Aufzeichnungen detektierten APs in drei Signalgruppen aufgeteilt. Die dabei verwendete Klassifikation der APs basiert auf der starken zeitlichen Korrelation dieser Signale mit den Licht- bzw. Dunkelphasen sowie dem Auftreten von APs innerhalb der ersten Stunden entweder nach einem Licht-Dunkel- oder Dunkel-Licht-Übergang.

Die oben erwähnten drei Signalgruppen betreffen die während der Lichtphasen, Dunkelphasen und in Folge von Licht-Dunkel- bzw. Dunkel-Licht-Übergängen (Lichtsignale, "Übergang-APs") zu beobachtenden Aktionspotentiale, wobei letztere in Licht-An-Signale und Licht-Aus-Signale unterteilt und innerhalb kurzer Zeit nach einem Dunkel-Licht- bzw. Licht-Dunkel-Übergang detektiert werden können.

Aufgrund der zeitlichen Präzision dieser Signale konnten die Photoperioden in Stundenblöcke gegliedert und die APs als "Übergang-APs" sowie als APs während der Dunkel- und Lichtphasen klassifiziert werden. Die Messungen haben gezeigt, dass bei der LTP *C. murale* unter dem Einfluss nicht-blühinduzierender Photoperioden Licht-An-Signale auftreten, während bei der KTP *C. rubrum* unter ebenfalls nicht-blühinduzierenden Lichtbedingungen eine Akkumulation der Signale in der 2. und 3. Stunde der Dunkelphase feststellbar ist. Unter dem Einfluss blühinduzierender Photoperioden zeigen beide Pflanzentypen eine grundlegende Änderung dieser Signalmuster: So treten bei der LTP *C. murale* statt Licht-An-Signale nun Licht-Aus-Signale auf. *C. rubrum* zeigt statt der Akzentuierung der 2. und 3. Stunde der Dunkelphase nun die Ausbildung deutlicher Licht-An-Signale.

In Langzeitmessungen konnte der Zusammenhang zwischen Blühinduktion und der Kategorisierung der "Übergang-APs" entweder als Licht-An- oder als Licht-Aus-Signale klar gezeigt werden, weshalb auch dieses Kriterium erfindungsgemäß als wichtiger Indikator herangezogen werden kann.

Schließt man die "Übergang-APs" zunächst von der weiteren Auswertung der AP-Verteilungsmuster aus, stellt man fest, dass bei der KTP *C. rubrum* unter blühinduzierenden Lichtbedingungen APs ausschließlich während der Dunkelphasen auftreten. Hingegen sind bei der LTP *C. murale* unter blühinduzierenden Bedingungen APs sowohl während der Dunkel- als auch während der Lichtphase nachweisbar.

In absoluten Werten unter Einbeziehung sämtlicher APs ergeben sich daher für die Pflanzenzustände folgende Indikatorprofile:
- KTP vegetativ: acropetale Ausbreitungsrichtung, gleich- mäßige Verteilung in Lichtphase (70 %), in Dunkelphase (30 %) signifikante Frequenz (Häufigkeit) während der zweiten und dritten Stunde (20 %)
- blühind.: basipetale Ausbreitungsrichtung, in Licht- phase (20-40 %) insbes. Licht-An-Signale mit signifikanter Frequenz (Häufigkeit) während der ersten Stunde (mind. 20 %)
- LTP vegetativ: basipetale Ausbreitungsrichtung, in Licht- phase (20 %) insbes. Licht-An-Signale mit signifikanter Frequenz (Häufigkeit) während der ersten Stunde (mind. 15 %), in Dunkel- phase (80 %) signifikante Frequenz während der letzten Stunde (mind. 10 %)
- blühind.: acropetale Ausbreitungsrichtung, in Licht- phase gleichmäßige Verteilung, in Dunkelphase insbes. Licht-Aus-Signale mit signifikanter Frequenz (Häufigkeit) während der ersten Stunde (mind. 10 %)

Damit zeigt sich, dass KTP und LTP eine für nicht-blühinduzierende und blühinduzierende Photoperioden jeweils charakteristische Verteilung der APs auf die Dunkel- und Lichtphasen ausprägen. Daraus folgt, dass auch die zeitliche Verteilung der APs auf die Dunkel- bzw. Lichtphasen erfindungsgemäß als Indikator für den Blühzustand bzw. -status der Pflanzen herangezogen werden kann.

Bezüglich der vorliegend verwendeten Begriffe "Lichtphase", "Dunkelphase", "Licht-An-Signale", "Licht-Aus-Signale", "Dunkel-Licht-Übergang" und "Licht-Dunkel-Übergang" wird darauf hingewiesen, dass die Klassifizierung dieser Phasen bzw. Signale in Abhängigkeit der für das zu untersuchende pflanzliche Material vorherrschenden Standortbedingungen unter Berücksichtigung der von der gegebenen geographischen Breite abhängigen jahreszeitlichen Änderung der Tageslänge und des täglichen Angebots an Photonen erfolgt. Diese Daten stehen dem Anwender zur Verfügung (z.B. Kalender mit Sonnenauf- und Sonnenuntergang). Unter Anwendung von Kunstlicht stellt die korrekte Zuordnung der obigen Begriffe keine Schwierigkeit dar.

In einer weiteren Versuchsreihe wurden hydraulische Druckimpulse und ihre Auswirkung auf das Ruhepotential der Blattstiele isolierter Einzelblätter untersucht. Derartige Druckimpulse, die durch das plötzliche Freisetzen von Wasser aus mechanisch verletztem Gewebe hervorgerufen werden, sind bekanntlich Ursache für das Auftreten lokal begrenzter Variationspotentiale (VPs). Durch Applikation von Druckimpulsen konnten reproduzierbar Variationspotentiale gemessen werden.

Am Beispiel von Polyethylenglycol (PEG) wurde zudem die Einwirkung chemischer Agenzien auf das elektrische Oberflächenpotential untersucht, wobei die Veränderungen des elektrischen Signalmusters unter vegetativen Lichtbedingungen über mehrere Tage hinweg aufgezeichnet wurden. Die erhaltenen Daten belegen, dass die Gewebsschädigungen mit einer charakteristischen AP-Frequenz korrelieren.

Die der vorliegenden Erfindung zugrunde liegende Erkenntnis, wonach verschiedene Zustände pflanzlichen Materials mit spezifischen elektrophysiologischen Aktivitätsmustern korrelieren, basiert auf der Durchführung zahlreicher Messungen und der Auswertung und strukturierten Verdichtung der erhaltenen Messdaten. Obgleich die grundlegenden Prinzipien der vorliegenden Erfindung im wesentlichen anhand der Untersuchung der durch Photoperiodizität gekennzeichneten Vorgänge erarbeitet worden sind, zeigen weitere Untersuchungen zur Reaktion pflanzlichen Materials auf chemische Agenzien und Stressfaktoren wie z.B. Wasserentzug, dass auch für hierdurch verursachte Zustände spezifische Aktivitätsmuster bzw. - profile erstellt und erfindungsgemäß als Grundlage diagnostischen oder manipulativen Handelns herangezogen werden können.

In der praktischen Anwendung bedeutet die Bereitstellung dieser Indikatoren, Muster oder Profile, dass Pflanzenzustände wie insbesondere der Blühstatus verlässlich anhand einer für den jeweiligen Zweck geeigneten Abfolge von Verfahrensschritten analysiert, bewertet und sogar manipuliert werden können.

Um die verschiedenen, erfindungsgemäß adressierbaren Zustände hinsichtlich der elektrophysiologischen Signatur definieren zu können, müssen für jeden Zustand bzw. für jeden externen Faktor spezifische Aktivitätsmuster erarbeitet werden, wobei diese Muster oder Profile erfindungsgemäß anhand der Häufigkeit oder Frequenz, der zeitlichen Verteilung und/oder der Ausbreitungsrichtung von Aktionspotentialen erstellt und zu charakteristischen Elektrophysiogrammen (EPGs) verdichtet werden können. Die hierdurch für jeden Faktor oder Zustand ermittelten Normwerte bilden die Grundlage für die erfindungsgemäßen Verfahren zur Überwachung, Diagnose und Manipulation pflanzlichen Materials. Selbstverständlich müssen diese Normwerte für jede interessierende Sorte, Art, Gattung und/oder Familie pflanzlichen Materials erarbeitet und zur Verfügung gestellt werden. Für den Fachmann ist jedoch klar, dass angesichts der konkreten Fragestellung nur solche Normwerte zur Überwachung, Diagnose oder Manipulation herangezogen werden brauchen, die angesichts der Aufgabenstellung relevant sind.

Für den Fachmann ist ebenfalls klar, dass derartige Normwerte nur aus der Durchführung von Langzeitmessungen unter Verwendung einer statistisch signifikanten Populationsgröße etabliert werden können. Erfindungsgemäß werden auch solche Daten als Normwerte bezeichnet, die aus Parallelmessungen resultieren. Beispielsweise ist denkbar, dass die Überwachung der elektrophysiologischen Parameter einer gegebenen Freilandkultur durch Abgleich mit den entsprechenden Daten einer benachbarten Vergleichskultur erfolgt. Gleichermaßen können Daten, die von einer bestimmten Pflanzengruppe in einem definierten Zeitraum aufgezeichnet wurden, als Normwerte für die Auswertung der von derselben Gruppe in einem späteren Zeitraum erhaltenen Messwerte herangezogen werden.

Erfindungsgemäß wird ferner vorgeschlagen, dass die obigen Normwerte vorzugsweise unter Einbeziehung der jahreszeitlich unterschiedlichen geographischen Einflussgrößen wie Tageslänge, Lichtquantität und -qualität (Rot/Blau-Verteilung) bereitgestellt und genutzt werden.

Auf der Grundlage der für verschiedene Zustände durchgeführten Untersuchungen konnten spezifische Elektrophysiogramme erstellt werden, deren Informationen über das elektrische Signalmuster blühinduzierter Pflanzen zu manipulativen Zwecken eingesetzt wurden. Ziel dieser Elektrostimulationsversuche war es, mit Hilfe ausgewählter DC-Impulsmuster die Blütenbildung unter nicht-induktiven Lichtbedingungen auszulösen. Die erzielten Ergebnisse zeigen, dass mit Gleichstromimpulsen während eines fixierten Zeitraums von 1½ Stunden an 7 aufeinanderfolgenden Tagen die Morphologie der Apices klar beeinflusst werden kann. Die elektrostimulierten Pflanzen zeigen gegenüber unbehandelten Referenzpflanzen eine auffällige Vergrößerung der Apices, wie sie im Verlauf der Blühinduktion auftritt. In Wiederholungsexperimenten konnte mit dem identischen DC-Impulsmuster eine eindeutige Blühinduktion bei 7 von 12 Versuchspflanzen festgestellt werden. Mit umgekehrter Polarität der Reizelektroden zeigen die Apices stimulierter Pflanzen keinen Unterschied zu den Apices nichtstimulierter Kontrollpflanzen. Diese Messergebnisse zeigen, dass die adäquate Polarität der Reizelektroden von entscheidender Bedeutung ist.

Die erfindungsgemäß bevorzugte Stromstärke sollte vom Fachmann unter Berücksichtigung des konkreten Anwendungsgebietes so gewählt werden, dass das zu behandelnde pflanzliche Material keine Schädigungen erleidet. Erfindungsgemäß wird vorgeschlagen, die Stromstärke des zu applizierenden Reizes zwischen 1 und 10 µA, vorzugsweise zwischen 2 und 8 µA, noch bevorzugter zwischen 4 und 8 µA einzustellen, wobei eine Stromstärke von 6 µA am meisten bevorzugt ist.

Obgleich für manipulative Zwecke, z.B. zur Verhinderung der Blühinduktion, auch eine Dauerstimulierung erfolgen kann, ist es erfindungsgemäß bevorzugt, Einzelsignale im Sekunden- oder Minutenbereich zu applizieren, wobei die Dauer der Einzelimpulse besonders bevorzugt etwa 30 Sekunden beträgt. Obwohl grundsätzlich alle Impuls- bzw. Signalformen wie Rechteck-, Sinus- und Sägezahnsignale eingesetzt werden können, ist die Anwendung von Rechtecksignalen bevorzugt.

Die Versorgungsspannung wird vorzugsweise durch eine ggf. variable Gleichspannungsquelle gewährleistet und in einem Bereich von 1,5 bis 20 V eingestellt, wobei Spannungen von 1,5, 3,0, 6,0, 9,0 und 12,0 V besonders bevorzugt sind.

Das zeitliche Stimulationsmuster wird in Abhängigkeit des jeweiligen Pflanzentyps (KTP/LTP) und den Zeitfenstern der Übergänge zwischen den endogenen oszillierenden photophilen und skotophilen Phasen ausgewählt.

Die erzielten Ergebnisse belegen, dass die Blühinduktion bei Pflanzen durch Applikation elektrophysiologischer Reize unter nicht-blühinduzierenden Bedingungen gezielt herbeigeführt werden kann. In Kenntnis des entsprechenden Signalkatalogs bzw. der relevanten Normwerte können daher zahlreiche Standortfaktoren hinsichtlich ihrer Einwirkung auf pflanzliches Material simuliert werden. Ferner können die Aktivitätsmuster, -profile oder Signalsignaturen zur Hemmung bzw. Inhibierung spezifischer Zustände eingesetzt werden. Beispielsweise kann die Blütenbildung verzögert werden, indem zu spezifischen Zeitpunkten Aktionspotentiale erzeugt werden, wodurch die Ausbildung der für die Blühinduktion des gegebenen Pflanzentyps relevanten "Übergang-APs" unterbunden wird.

Aufgrund der vorliegenden Erkenntnisse und Verfahren zur Datenerhebung können vom Fachmann zahlreiche Anwendungsgebiete erschlossen werden.

Im Rahmen der Überwachung und Diagnose pflanzlicher Zustände werden wirksame Methoden zum Qualitätsmanagement in der Pflanzenvermehrung sowie in der Züchtung (z.B. Ermittlung des juvenilen, reifen und seneszenten Vegetationszustandes von Palmen) ermöglicht. Ferner können die Kulturbedingungen und andere Standortfaktoren sowie der Blühstatus z.B. transgener Pflanzen im Freilandanbau überwacht bzw. diagnostiziert werden.

Die Anwendung der erfindungsgemäßen Verfahren für manipulative Zwecke betrifft die. Induktion, Modulation (Steuerung) und Inhibition (Hemmung, Verhinderung) pflanzlicher Zustände und ermöglicht z.B. die Verzögerung der Blütenbildung und damit Sicherung der Ernte durch Schutz frühblühender Obstbäume vor Frost, die Unterdrückung der Blütenbildung transgener Pflanzen im Freilandanbau, die Induktion von Abwehrreaktionen auf negative Standortfaktoren wie z.B. Pathogenbefall, sowie die Induktion der Blütenbildung und Fruchtreifung.

Nach einem weiteren Aspekt der vorliegenden Erfindung wird eine Messvorrichtung bereitgestellt, welche neben geeigneten Elektroden einen Differenzverstärker, einen A/D-Wandler, sowie eine Einheit zur Speicherung, Auswertung und/oder Steuerung umfasst, wobei die Signalübertragung zwischen den Komponenten vorzugsweise drahtlos erfolgt. Vorzugsweise ist der Differenzverstärker mit einem geeigneten Filter zur Ausblendung unerwünschter Störsignale ausgestattet. Diese Messvorrichtung kann erfindungsgemäß auch für manipulative Zwecke eingesetzt werden, wobei die Steuereinheit die benötigten Signalmuster liefert.

Die Erfindung und vorteilhafte Ausgestaltungen werden anhand der Figuren näher erläutert:

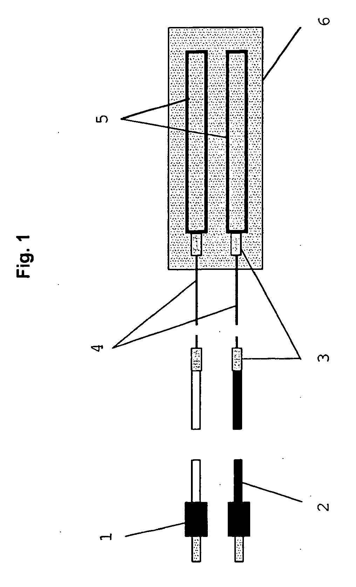

Figur 1 zeigt eine schematische Darstellung des Aufbaus einer bipolaren Oberflächenelektrode. 1 = Ministecker; 2 = Signalkabel; 3 = Schrumpfschlauch; 4 = Kupferlackdraht; 5 = Kontaktelektrode; 6 = Klebeband.

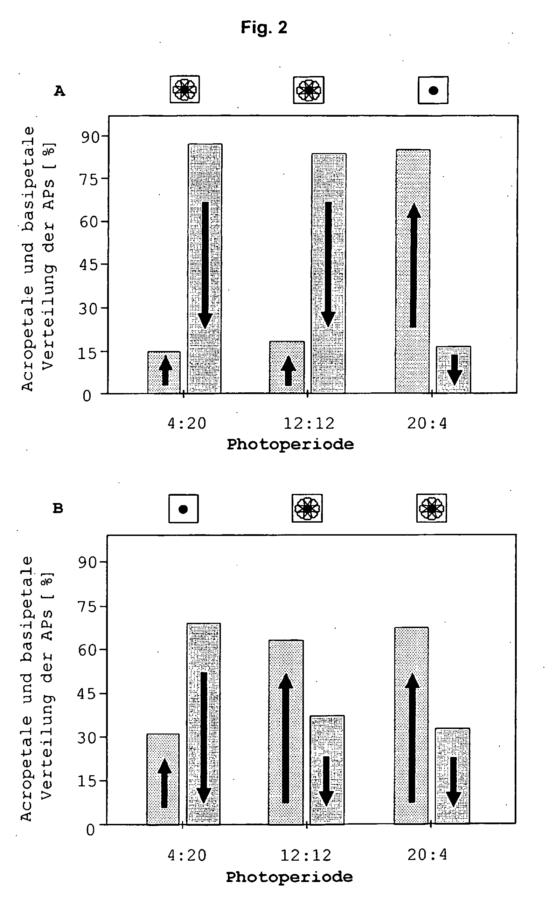

Figur 2 zeigt die prozentuale Verteilung der APs von *C. rubrum* (KTP)(A) und *C. murale* (LTP) (B) auf die acropetale und basipetale Ausbreitungsrichtung unter dem Einfluss nicht-blühinduzierender und blühinduzierender Photoperioden. Ausgewertet wurden sämtliche für *C. rubrum* (m = 10, n = 176 APs) und *C. murale* (m = 10, n = 260 APs) unter den Photoperioden LD 4:20, 12:12 und 20:4 [h] nachgewiesenen APs. Versuchsbedingungen: 20°C, 70% relative Luftfeuchtigkeit, PAR: 120 [µmol/m²sec]. Die Blütenpiktogramme markieren nicht-blühinduzierende bzw. blühinduzierende Photoperioden.

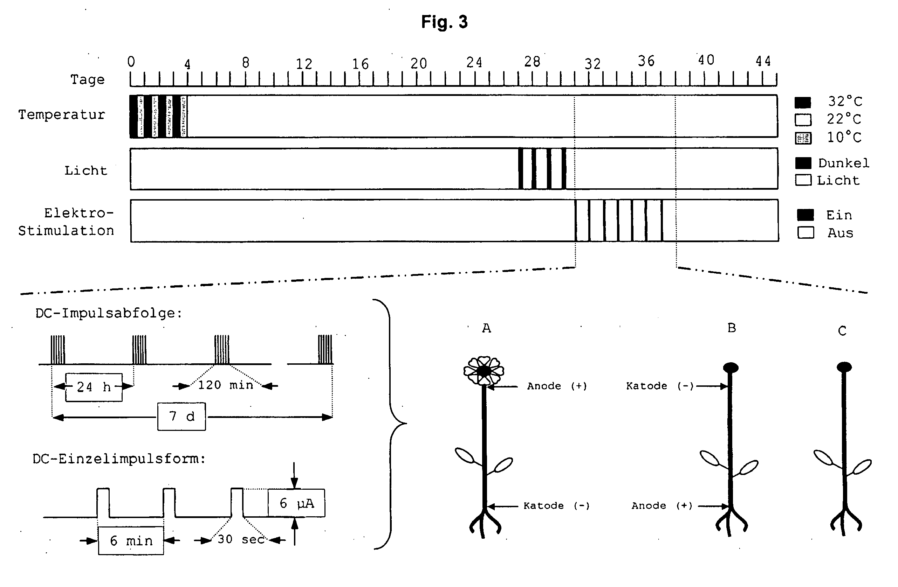

Figur 3 veranschaulicht die Elektrostimulation der Blütenbildung bei *C. rubrum* unter nicht-blühinduzierenden Lichtbedingungen. Dargestellt ist die Keimung, Aufzucht und Vorsynchronisation der Versuchspflanzen. Das während der 7-tägigen Elektrostimulationsphase verwendete DC-Impulsmuster hat mit entsprechender Polarität bei 7 von 12 Versuchspflanzen (A) die Blütenbildung trotz vegetativer Photoperiode ausgelöst. Die umgekehrte Polarität der Reizelektroden löste keine Blütenbildung aus (B). Die nicht stimulierten Kontrollpflanzen blieben vegetativ (C).

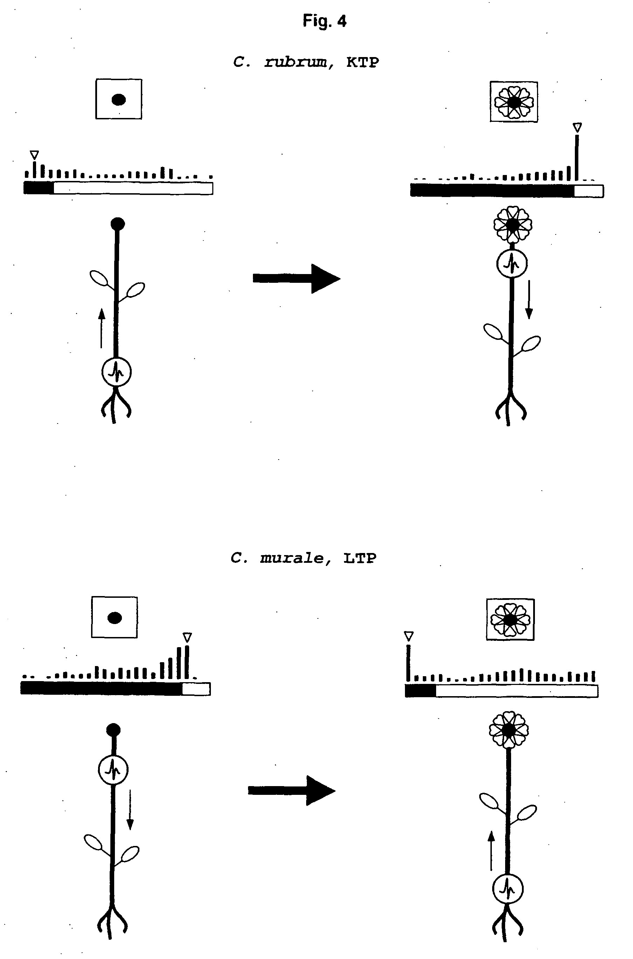

Figur 4 zeigt für *C. rubrum* (KTP) und *C. murale* (LTP) erstellte Elektrophysiogramme. Dargestellt sind die Veränderungen der zeitlichen Verteilung und der Ausbreitungsrichtung der APs unter dem Einfluss nicht-blühinduzierender und blühinduzierender Photoperioden. Die Graphik liefert Angaben über das AP-Verteilungsmuster auf die täglichen 24 Stundenblöcke (Säulendiagramme); die Zeitpunkte der größten AP-Häufung während der jeweiligen Photoperiode (▼); die überwiegende Ausbreitungsrichtung der APs über die Sprossachse (acropetal (↑), bzw. basipetal (↓)), und die Position des am stärksten aktiven hypothetischen AP-erzeugenden "Zentrums" in der Wurzelhalsregion bzw. dem Apikalbereich der Sprossachse. Blühinduzierende Photoperioden sind durch Blütenpiktogramme gekennzeichnet. *C. rubrum;* m = 38, n = 762 APs, d = 9,0 ; *C. murale*: m = 47, n = 1043 APs, d = 10,3. Lichtphasen sind durch weiße, Dunkelphasen durch schwarze Querbalken gekennzeichnet. Photoperioden: LD 20:4 und 4:20 [h].

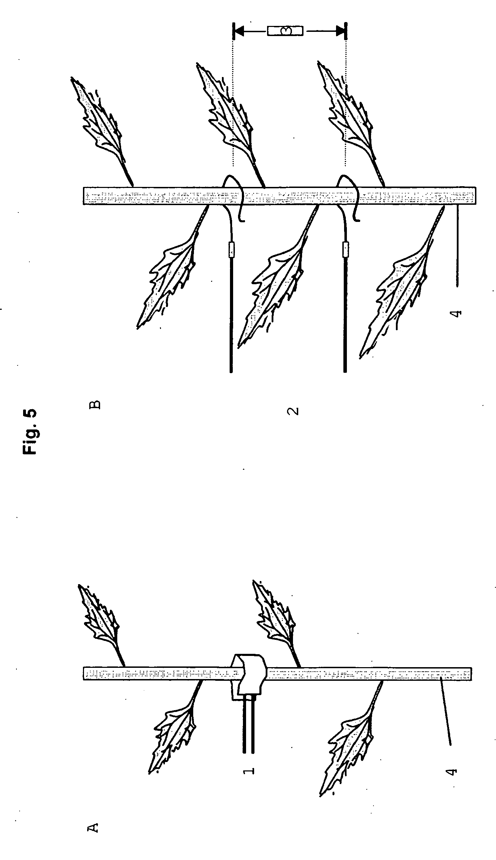

Figur 5 zeigt die Positionierung einer bipolaren Oberflächenelektrode (A) und einer Oberflächen-Reizelektrode (B) auf der Sprossachse. 1 = Bipolare Oberflächenelektrode mit ihrem + und - Pol; 2 = Reizelektrode bestehend aus einer Anode und Katode; 3 = Abstand von Anode und Katode frei wählbar; 4 = Sprossachse.

Die nachfolgenden Beispiele dienen der Veranschaulichung der Erfindung, nicht aber der Beschränkung der der Erfindung zugrunde liegenden allgemeinen Prinzipien.

### Beispiele

### Versuchspflanzen

*Chenopodium rubrum* L. (Roter Gänsefuß) und *Chenopodium murale* L. (Mauer-Gänsefuß) gehören zur Familie der *Chenopodiaceae* und zur Ordnung der *Caryophyllales.* Sie bevorzugen sälzreiche Böden und besitzen als Ruderalpflanzen ein großes Verbreitungsgebiet. Von besonderem Interesse für die Untersuchungen zur photoperiodischen Steuerung der Blütenbildung sind dabei die verschiedenen Ökotypen von *Chenopodium rubrum.* Sie weisen in Abhängigkeit zur geographischer Lage ihres Ursprungsortes unterschiedliche kritische Tageslichtlängen auf und unterscheiden sich auf diese Weise in ihrem photoperiodischen Verhalten deutlich voneinander. Der im Rahmen dieser Arbeit verwendete Ökotyp 374 stammt aus dem Norden Kanadas (Yukon; 60°47'N, 137°32'W) und wird hier als Modellsystem einer gut charakterisierten obligatorischen Kurztagpflanze eingesetzt. Als Modellpflanze für die Untersuchungen an Langtagpflanzen wurde *C. murale* verwendet. Die geographische Herkunft des entsprechenden Saatguts liegt in Kalifornien.

### Aufzucht der Versuchspflanzen

### Keimung von Chenopodium rubrum und Chenopodium murale

Die Aussaat von *Chenopodium rubrum* (Kurztagpflanze, Ökotyp 374) und *Chenopodium murale* (Langtagpflanze, Ökotyp 197) erfolgt im regelmäßigen Wochenrhythmus. Dazu werden zu Wochenbeginn ca. 50 Samen in ein mit feinkörnigem Vermiculit (3-6 mm) gefülltes Plastiktöpfchen (0 50mm) gegeben und die Samen durch leichtes Schütteln der Aufzuchttöpfchen geringfügig in das anorganische Substrat eingearbeitet. Die bis zu 18 Aufzuchttöpfchen fassenden Aufzuchtwannen werden anschließend mit Leitungswasser gefüllt und in eine Keimtruhe gebracht. Um eine Blühinduktion der Langtagpflanzen während der Keimungsphase zu verhindern, werden die Aufzuchtwannen von *C. murale* in eine Dunkelbox gestellt. Im Dauerweißlicht (*C. rubrum*) bzw. Dauerdunkel (*C. murale*) und einem 12:12 Stunden Temperaturzyklus von 32°C : 10°C (Keimtruhe) keimen annähernd 100% der Samen innerhalb von vier Tagen aus.

### Kultivierung von Chenopodium rubrum

Nach drei Tagen in der Keimtruhe werden die Aufzuchtwannen von *C. rubrum* (Kurztagpflanze) in die Phytokammer I bzw. den Klimaschrank transferiert. Dort wird die Restflüssigkeit in den Aufzuchtwannen entfernt und die Keimlinge werden mit einer 40% Nährlösung versorgt. Unter Dauerlicht (LL) (Phytokammer I: Xenon Hochdruck-Lichtbogenlampen, PAR = 140 [µmol/m²sec]; Klimaschrank: Leuchtstofflampen, PAR = 116 [µmol/m²sec]) sowie 22°C und 70% relative Luftfeuchtigkeit erfolgt die weitere vegetative Aufzucht der Versuchspflanzen.

Während der Aufzucht werden die Versuchspflanzen mit Hilfe von Ventilatoren in 2 Minuten Schaltintervallen einem künstlichen Luftstrom ausgesetzt, der über die mechanische Beanspruchung der Sprossachsen zur Ausbildung von Festigungsgeweben führt (Thigmomorphogenese) und gleichzeitig einer Desensibilisierung der Versuchspflanzen gegenüber Berührungen hervorruft, wie sie z.B. während dem Anlegen der Oberflächenelektroden auftreten. Während die abgeleiteten elektrischen Signale nicht desensibilisierter Versuchspflanzen innerhalb der ersten zwei Versuchstage kein stabiles Ruhepotential aufweisen, zeichnen sich desensibilisierte Pflanzen bereits wenige Stunden nach Aufzeichnungsbeginn durch deutliche Signale und einen ruhigen Verlauf des Ruhepotentials aus. Aufgrund der starken Belüftungsanlage im Klimaschrank, die bereits ausreicht, um Pendelbewegungen der Pflanzen auszulösen, kann dort auf den zusätzlichen Einbau eines Ventilators verzichtet werden.

Sobald die Keimlinge eine Länge von ca. 10 mm erreicht haben, wird mit einer Pinzette die Anzahl der Keimlinge auf eine Pflanze pro Topf reduziert. Dabei wird gleichzeitig auf Versuchspflanzen mit vergleichbarem Entwicklungstand hin selektiert. Im Alter von ca. 21 Tagen werden die 18 Pflanzen einer Aufzuchtwanne auf zwei Kunststoffwannen mit je 9 Pflanzen verteilt. Dadurch wird verhindert, dass sich benachbarte Pflanzen gegenseitig beschatten bzw. ihre Wurzelstränge miteinander verwachsen.

Nach ca. 4 Wochen haben die Internodien im mittleren und untersten Sprossachsenabschnitt die für die Experimente benötigte Mindestgröße von ca. 25 mm erreicht, so dass die Oberflächenelektroden problemlos auf den Sprossachsen befestigt werden können. Die Pflanzen besitzen zu diesem Zeitpunkt eine Länge von ca. 16 cm. Die Versuchspflanzen werden vor Beginn der Messungen auf 2 Pflanzen pro Nährstoffwanne aufgeteilt, um auch während den Langzeitmessungen von ca. 10 Tagen Dauer der gegenseitigen Beschattung der Blätter und der daraus möglicherweise resultierenden Induktion der Blütenbildung entgegen zu wirken.

### Kultivierung von Chenopodium murale

Nach drei Tagen in der Keimtruhe werden die Aufzuchtwannen aus der Dunkelbox entnommen, überschüssiges Wasser entfernt, und die Pflanzen werden mit 40% Nährlösung versorgt. Die weitere Aufzucht erfolgt im Phytoschrank unter der vegetativen Photoperiode mit dem Licht-Dunkel-Wechsel (LD) von 4:20 sowie konstanten 22°C. Auch hier wird mit Hilfe von Lüftern in 5 Minuten Schaltintervallen ein künstlicher Luftstrom erzeugt, der über die Pendelbewegungen der Sprossachsen zu einer Desensibilisierung der Versuchspflanzen gegenüber mechanischen Beanspruchungen führt. Vergleichbar mit der Aufzucht von *C*. *rubrum* wird mit der Vereinzelung der Keimlinge begonnen, sobald die Pflanzen eine Größe von ca. 10 mm erreicht haben.

*C. murale* besitzt unter den verwendeten Aufzuchtbedingungen ein im Vergleich zu *C. rubrum* deutlich verlangsamtes Wachstum. So erreicht die Langtagpflanze *C. murale* frühestens nach ca. 12 Wochen die für die Versuche benötigte Internodienlänge von mindestens 25 mm. Da mit dem verlangsamten Wachstums von *C. murale* auch ein großer Platzbedarf während der Aufzucht verbunden ist, wird aus organisatorischen Gründen in allen Vorversuchen und Einzelexperimenten die schnell wachsende Versuchspflanze *C. rubrum* eingesetzt. Auch *C. murale* Versuchspflanzen werden vor Beginn der Messungen auf kleinere Aufzuchtwannen mit max. zwei Pflanzen pro Kunststoffwanne verteilt, um eine gegenseitige Beschattung der Pflanzen zu vermeiden.

### Regelung physikalischer Parameter

### Phytokammer I

### Steuerung der Lichtfelder in Phytokammer I:

Phytokammer I wird für die vegetative Aufzucht der Kurztagpflanze *C. rubrum* verwendet und mit Dauerlicht (LL) betrieben. Auf den Einsatz einer zusätzlichen Steueranlage für die beiden Xenon Hochdruck-Lichtbogenlampen kann deshalb verzichtet werden.

### Temperatur und Luftfeuchtigkeit in Phytokammer I:

Die Raumtemperatur und Luftfeuchtigkeit sind über die Sollwertregler der Klimaanlage von Phytokammer I frei einstellbar. Für die Aufzucht von *C. rubrum* wird eine relative Luftfeuchtigkeit von 70 % und eine Temperatur von 22°C verwendet.

### Phytokammer II

### Steuerung der Lichtfelder in Phytokammer II:

Die elektrophysiologischen Messungen in Phytokammer II dienen den Untersuchungen der Veränderungen des Oberflächensummenpotentials von Kurz- und Langtagpflanzen unter die Blütenbildung nicht-induzierenden und induzierenden Photoperioden. Für eine automatisierte Schaltung der Licht-Dunkel-Wechsel wird auf eine computergestützte Steuerung der Lichtanlage zurückgegriffen. Für die hier dargestellten Versuche werden ausschließlich Xenon Hochdruck-Lichtbogenlampen verwendet. Die beiden Lampen mit einer maximalen Nennleistung von je 10 kW befinden sich in einer über der Phytokammer liegenden Lampenkammer. Das durch einen Lichtschacht in die Phytokammer einfallende Licht wird durch ein luftgekühltes Wärmeabsorptionsglas (*KG1,* 3 mm) und durch ein ebenfalls luftgekühltes Thermopane®-Doppelwärmeisolationsglas (6 mm) gefiltert. Zwischen den Xenonlampen und dem Wärmeisolationsglas befindet sich ein Metallrollo. Das Öffnen und Schließen des Rollo wird, wie die Lampenleistung auch, durch den Rechner der Lichtanlagen gesteuert. Das Rollo hat die Aufgabe, die technisch begründeten Veränderungen des Lichtspektrums, wie sie unmittelbar nach dem Ein- und Ausschalten der Lampen auftreten, abzuschirmen. So bleibt das Rollo während der Startphase und dem Aufheizen der Lampen geschlossen, bis die Lampen die gewünschte Leistung erreichen. Um eine Belichtung der Versuchspflanzen mit dem starken Rotlichtanteil der nachglühenden Katoden im Anschluss an das Ausschalten der Lampen zu verhindern, wird kurz vor dem Ausschalten der Lampen das Metallrollo automatisch geschlossen. Die Funktion des Rollo und das Zünden der Lampen wird mittels eines Lichtsensors im Lichtschacht registriert. Eventuelle Fehlfunktionen des Rollo bzw. der Lampen werden auf der Steuereinheit angezeigt.

Eine zusätzliche Kontrolle der periodischen Schaltintervalle der Lichtanlage wird durch einen weiteren Lichtsensor erreicht. Dieser ist direkt an die Anlage zur Aufzeichnung des Oberflächensummenpotentials angeschlossen. Veränderungen der Lichtquantität können so zuverlässig erkannt und in direktem Zusammenhang mit auffälligen Änderungen des Oberflächensummenpotentials gebracht werden. Die Bestimmung und Überwachung der Qualität des Lichtspektrums wird zu Beginn und zum Abschluss der Experimente durchgeführt(siehe unten).

### Temperatur und Luftfeuchtigkeit in Phytokammer II:

Sämtliche Messungen werden bei 22 ± 0,4°C und 70% relative Luftfeuchtigkeit durchgeführt.

### Konstantraum

### Steuerung der Lichtfelder im Konstantraum:

Für sämtliche Experimente werden zwei HQI-Lampen mit der Nennleistung von je 400 W verwendet. Die Steuerung der Lichtanlagen erfolgt über eine digitale Zeitschaltuhr. Im Unterschied zur Lichtanlage in Phytokammer II ist der Konstantraum nicht mit einem Lichtrollo ausgestattet. Veränderungen des Lichtspektrums, wie sie während des Aufheizens bzw. Nachglühens der Lampen auftreten, werden deshalb nicht abgeschirmt. Das führt dazu, dass die Dunkel-Licht-Übergänge im Konstantraum im Unterschied zu den Belichtungswechseln in Phytokammer II nicht sprunghaft erfolgen. Die in der Anlage integrierten HQI-Lampen benötigen ca. 5 Minuten vom Startzeitpunkt bis zum Erreichen ihrer konstanten Lichtleistung. Das sichtbare Nachglühen der Lampen erstreckt sich über einen Zeitraum von ca. 60 sec.

### Temperatursteuerung im Konstantraum:

Die Regelung der Raumtemperatur in Konstantraum erfolgt über eine Klimaanlage. Mit Hilfe von drei in die Klimaanlage integrierten Ventilatoren wird die über den HQI-Lampen aufsteigende warme Abluft abgeführt, auf 22°C abgekühlt und in den Messraum geblasen. Um einen Wärmestau unterhalb des Lampenfelds zu vermeiden, werden zwei weitere Lüfter zwischen den Luftspalt von Lampenaufhängung und Wärmeschutzglas angebracht, die die warme Abluft ausblasen und gegen kühlere Raumluft ersetzen. Der Luftstrom eines dritten Gebläses kann auf die Unterseite des Wärmeschutzglas ausgerichtet werden. Dadurch wird ein Wärmestau innerhalb des Faraday-Käfigs verhindert.

### Klimaschrank

Die Programmierung und Steuerung der Lichtanlage, Temperatur und Luftfeuchtigkeit des Klimaschranks erfolgt über ein Eingabefeld an der Außenseite des Gerätes. Soll- und Ist-Werte werden von der Anlage automatisch miteinander verglichen und nach Bedarf nachgeregelt.

### Analyse der Lichtspektren der Lampenfelder

Vor Beginn der Untersuchungen wird die spektrale Zusammensetzung des Lichts sämtlicher in der Aufzucht und während der Experimente verwendeter Lampenfelder bestimmt. Die Messungen können mit Hilfe eines Spektroradiometers erfolgen. Der Lichtsammler der Messvorrichtung wird auf mittlere Pflanzenhöhe unter das jeweils zu untersuchende Lichtfeld gebracht, und die Intensitäten der Lichtwellenlängen in 2 nm Intervallen in einem Bereich zwischen 250 bis 800 nm automatisch bestimmt.

Die Lichtspektren der verschiedenen Lampenfelder sollten den Wellenlängenbereich zwischen 340 und 800 nm lückenlos abdecken, damit das natürliche Lichtspektrum qualitativ ausreichend simuliert werden kann.

Zusätzlich zur Bestimmung der Lichtspektren kann die Intensität der photosynthetisch aktiven Strahlung PAR (*photosynthetic active radiation*) [µmol Photonen x m⁻² x s⁻¹] im Bereich zwischen 350 und 720 nm bestimmt werden. Für diese Messungen kann der Lichtsensor eines Messgerätes auf mittlerer Pflanzenhöhe positioniert und der Mittelwert einer z.B. 15 Sekunden Messung automatisch bestimmt und festgehalten werden.

Mit Ausnahme der Keimungsbedingungen betrugen die Intensitäten der Lichtfelder zwischen 113 und 169 µmol Photonen x m⁻² x s⁻¹.

### Aufbau der Oberflächenelektroden

Die physiologische Aktivität der Pflanzen erzeugt auf den Oberflächen der Pflanzen Veränderungen des elektrischen Potentials, die mit geeigneten Elektroden nachgewiesen werden können. Für die Durchführung von Langzeitmessungen von mindestens 7 Tagen Dauer sollte vorzugsweise eine bipolare Oberflächenelektrode eingesetzt werden, wodurch eine verletzungsfreie elektrische Ableitung bei gleichzeitig geringsten mechanischen Belastungen der Pflanzen ermöglicht wird. Eine derartige Elektrode zur nicht-invasiven Messung kann beispielsweise wie folgt ausgestaltet sein.

Jede Kontaktelektrode besteht aus zwei einzelnen, ca. 2 cm langen silbergalvanisierten Kupferdrähten (0 0,2 mm), die ein geringes Gewicht bei gleichzeitiger hoher Flexibilität aufweisen. Die beiden Enden der Kontaktelektroden sind in einer langgestreckten Schlaufe an einen isolierten Kupferlackdraht (0 0,22 mm) als Signalkabel angelötet, und die Lötstelle ist mit einem Schrumpfschlauch abgedeckt. Die Gesamtlänge des Elektrodendrahts, der die Kontaktfläche zwischen der bipolaren Elektrode und der Pflanzenoberfläche definiert, beträgt ca. 80 mm. Der Kupferlackdraht und das anschließende kunststoffisolierte Signalkabel (LiYv-Schaltlitzen, Ø 0,14 mm) sind über eine Lötstelle miteinander verbunden. Der Kontakt zwischen den ca. 50 cm langen Signalkabeln und den Differenzverstärkern wird über Ministecker hergestellt.

Um die Oberflächenelektroden an den Pflanzen anbringen zu können, werden die Kontaktelektroden beispielsweise im Abstand von ca. 3 mm auf einem vorzugsweise atmungsaktiven Klebebandstreifen befestigt, mit dem die Elektroden auf der Sprossachse fixiert werden (siehe Figur 1). Um den Übergangswiderstand zwischen Pflanzen- und Elektrodenoberfläche zu minimieren, können die Kontaktflächen der Elektroden zu Versuchsbeginn dünnflächig mit einem weitgehend inerten Kontaktgel überzogen werden. Hierfür eignet sich beispielsweise ein Gel, das in der Medizin z.B. bei EEG Untersuchungen eingesetzt wird.

Für die Messungen werden die Elektroden mit einheitlicher Polarität (+ Pol acropetal, - Pol basipetal) vorsichtig auf den Sprossachsen bzw. Blattstielen angebracht.

### Bipolare Ableitung

Grundlage der bipolaren Ableitung ist die Verwendung von zwei Elektrodenkontaktflächen pro Messpunkt, die im folgenden als + Pol und - Pol bezeichnet sind. Die Kopplung der aus den + und - Polen stammenden Signale erfolgt in den nachgeschalteten Differenzverstärkern. Dort wird aus der Differenz der beiden Eingangssignale die elektrische Potentialänderung [mV] berechnet, die zwischen den beiden Kontaktelektroden im Verhältnis zum Bezugspotential besteht. Da mit den verwendeten Oberflächenelektroden nicht das Potential einzelner Zellen sondern ganzer Zellverbände entlang des Sprossachsenumfangs abgeleitet wird, handelt es sich bei den aufgezeichneten Signalmustern um das elektrische Oberflächen(summen)potential der Zellverbände, die sich in unmittelbarer Nähe zu den beiden Ableitelektroden befinden.

Das Bezugspotential der Messung ist ein Gesamtpotential. Es setzt sich zusammen aus der Verschaltung aller an der Messung beteiligter Gerätegehäuse, Halterungen und ggf. des Faraday-Käfigs. Über eine Platindraht Bezugselektrode (Ø 0,4 mm), die in das Substrat der Pflanzentöpfchen eingestochen wird, ist auch das Versuchspflanzensubstrat mit dem Bezugspotential kurzgeschlossen. Da das Gesamtpotential keinen definierten Wert besitzt, handelt es sich bei sämtlichen Messwerten der Oberflächenelektroden um Relativwerte, die eine Veränderung des Oberflächensummenpotentials [mV] im Verhältnis zur Veränderung des Bezugspotentials der Messanlage wiedergeben. Um mögliche Ausgleichsströme zwischen dem Pflanzenkormus und den Signaleingängen der Differenzverstärker zu verhindern, besitzen die Verstärker einen Eingangswiderstand von 20 MOhm und einen Eingangswiderstand gegen Masse von 10 MOhm. Durch den Einsatz eines 100 Hz *Low-Pass*-Filters kann das Elektrodensignal von hochfrequenten Störungen befreit werden.

Nach einer z.B. 10-fachen Verstärkung des Eingangsignals wird dieses beispielsweise über metallgeschirmte Koaxkabel (RG 58) der A/D-Wandlerkarte zugeführt. Der Einsatz von Differenzverstärkern führt dazu, dass bereits bei der Signalerfassung schnelle elektrische Felder und Potentialänderungen, wie sie auch während der Schaltvorgänge elektrischer Geräte kurzfristig auftreten können, bei den Aufzeichnungen ausgeblendet werden. Die im Vergleich dazu langsamen, im Rahmen der vorliegenden Erfindung relevanten elektrischen Pflanzensignale treffen mit einer deutlichen Zeitverzögerung am + und - Pol des Differenzverstärkers ein und werden verstärkt. Das zeitliche Auflösungsvermögen der in den Versuchen verwendeten Differenzverstärker ist durch den eingesetzten *Low-Pass*-Filter auf < 100 Hz definiert. In den nachgeschalteten Rechnereinheiten erfolgt gewünschtenfalls die weitere Datenverarbeitung unter Verwendung geeigneter Software wie z.B. *Chart* (*ADinstruments*) oder *NextView*/*NT* (*BMC*). Sämtliche Arbeiten an den Versuchspflanzen und den Messvorrichtungen können zum Schutz vor unerwünschten Spannungsspitzen und Ausgleichsströmen zwischen Experimentator und Versuchsaufbau mit einer um das Handgelenk angelegten Potentialmanschette durchgeführt werden.

### Messanlage in Phytokammer II

Die in Phytokammer II verwendete Messanlage ist für Langzeitmessungen von mindestens 7 Tagen Dauer ausgelegt. Sie dient der Aufzeichnung der Veränderungen des Oberflächensummenpotentials bei *C. rubrum* und *C. murale* unter verschiedenen Photoperioden. Für die Ableitungen werden die bereits oben beschriebenen selbstklebenden Oberflächenelektroden verwendet. Die Signalerfassung erfolgt über Differenzverstärker und einer 32-Kanal 32 bit A/D-Wandlerkarte. Die Abtastrate der Wandlerkarte wird auf 200 Hz eingestellt.

### Messanlage im Konstantraum

Im Unterschied zur Messanlage in Phytokammer I ist die Versuchsanlage im Konstantraum von einem Faraday-Käfig umgeben, der mögliche elektromagnetische Störungen von außen abschirmt. Darüber hinaus ermöglicht es der Käfig, sich auch während der Versuche im Messraum aufzuhalten, um z.B. Veränderungen bei der Nährstoffversorgung der Pflanzen durchführen zu können, ohne dass es zu einer Beeinträchtigung der Messung durch Veränderungen des elektrischen Felds kommt. Versuchspflanzen, Elektroden, Lichtsensor und Differenzverstärker befinden sich bei dieser Ausführungsform innerhalb des Faraday-Käfigs, dessen Potential mit den Gehäusen und Stativen des Versuchsaufbaus kurzgeschlossen ist. Die Netzteile der Differenzverstärker befinden sich außerhalb des F-Käfigs. Zur Überwachung der elektrischen Feldstärke kann ein zusätzlicher E-Feld-Sensor in den Faraday-Käfig eingebracht und dessen Ausgangssignal synchron zu den Pflanzensignalen aufgezeichnet werden. Das Signal der Differenzverstärker wird über Koaxkabel aus dem Faraday-Käfig geführt und beispielsweise einer 16-Kanal A/D-Wandlereinheit zugeführt werden. Die Abtastraten der Messungen werden, je nach Ziel der Messung, zwischen 4 und 200 Hz gewählt. Mit Hilfe der Software (z.B. *Chart*) kann dann die weitere Datenbearbeitung durchgeführt werden. Jede Versuchspflanze steht während der Versuchsphase in einer separaten Nährstoffwanne mit geneigtem Wannenboden. Über ein von außerhalb des Faraday-Käfigs regelbares Schlauchventilsystem kann sämtliche Flüssigkeit aus den Wannen rasch abgelassen und durch neues Medium ersetzt werden.

### Vorrichtung für Ableitungen von der Wurzeloberfläche

Um Messungen des Oberflächenpotentials auf der Wurzeloberfläche durchführen zu können, ohne einen Kurzschluss der Wurzelelektroden mit der in Verbindung zum Bezugspotential stehenden Nährlösung zu verursachen, werden spezielle Nährstoffwannen verwendet. Mit diesen Wannen wird der Abstand zwischen den Aufzuchttöpfen der Pflanzen und dem Flüssigkeitsspiegel auf ca. 2 cm erhöht. Dadurch können die Elektroden in Kontakt mit der Wurzeloberfläche gebracht werden, ohne in die Nährlösung einzutauchen und damit einen Kurzschluss mit dem Bezugspotential zu verursachen.

### Messanlage für Einzelblattableitungen

Für die Experimente mit isolierten Einzelblättern von *C. rubrum* wird eine Blatthalterung verwendet, die es ermöglicht, die Änderungen des elektrischen Oberflächenpotentials von bis zu 16 Einzelblättern unter verschiedenen Versuchsbedingungen parallel aufzuzeichnen. Zu diesem Zweck werden die Einzelblätter - vorzugsweise unter Wasser - mit einer scharfen Schere von den Pflanzen abgetrennt. Anschließend werden die Blätter vorsichtig in jeweils mit 40% Nährlösung gefüllte Pipettenspitzen gesteckt. Um einen Austritt der Nährlösung zwischen Blattstiel und der Öffnung der Pipettenspitze zu verhindern und um die Blattstiele in ihren Halterungen zu fixieren, kann zwischen Kanülenspitze und Blattstiel Knetmasse als Dichtungsmittel aufgetragen werden.

Jede Kanüle wird separat über ein Schlauchsystem mit einem Nährtstofftank verbunden, dessen Flüssigkeitsspiegel oberhalb der Blattspreite der Versuchsblätter liegen sollte. Über gezieltes Entleeren und Befüllen der Nährstofftanks mit verschiedenen Wirkstoffen können unterschiedliche Experimente an den Einzelblättern durchgeführt werden.

Die Ableitung des Oberflächensummenpotentials erfolgt wie zuvor beschriebenen mit Oberflächenelektroden. Das Ausgangssignal der Differenzverstärker wird zusammen mit dem Signal des Lichtsensors über Koaxkabel einer 32bit 16-Kanal PCMCIA Messkarte zugeführt, und die Messwerte können beispielsweise mit Hilfe der Software *NextView erfasst* werden. Die Abtastrate kann dabei je nach Versuchsziel bis max. 2 kHz frei gewählt werden.

### Elektrostimulation

Für die Elektrostimulation der Blütenbildung wird die Kurztagpflanze *C. rubrum* eingesetzt. Diese zeigt im vergleich zu *C. murale* ein deutlich beschleunigtes Wachstum und kann unter Dauerlicht vegetativ aufgezogen werden. Dies erleichtert die Handhabung der Versuchspflanzen, so dass Versuchsaufbau und Versuchsstart zunächst unabhängig von den zeitlichen Vorgaben der Licht-Dunkel-Wechsel der vegetativen Aufzucht durchgeführt werden können. Die Experimente zur Elektrostimulation werden bei Dauerlicht, also für die Kurztagpflanze *C. rubrum* unter nicht-blühinduzierenden Lichtbedingungen, sowie bei 22°C und 70% relativer Luftfeuchtigkeit in Phytokammer I durchgeführt.

Gewünschtenfalls können die Pflanzen vor Versuchsbeginn mit Hilfe der nicht-blühinduzierenden Photoperiode LD 20:4 vorsynchronisiert werden. Der dabei verwendete periodische Licht-Dunkel-Wechsel hat "Zeitgeber"-Funktion und führt dazu, dass die endogenen Rhythmen der einzelnen Versuchspflanzen über die Belichtungswechsel miteinander synchronisiert werden. Dadurch ist zu erwarten, dass alle Versuchspflanzen mit der gleichen physiologischen Sensibilität auf die elektrischen Impulse reagieren. Im Anschluss an die Elektrostimulationsphase werden die Versuchspflanzen für mindestens 5 weitere Tage unter Dauerlicht kultiviert. Anschließend wird der Blühstatus der einzelnen Versuchspflanzen anhand der Morphologie der Apices mikroskopisch bestimmt.

Für die Übertragung der elektrischen Impulse auf die Sprossachsenoberfläche der Versuchspflanzen können beispielsweise Platindrahtelektroden verwendet werden. Die einzelnen + Pole (Anode) und - Pole (Katode) der Reizelektroden bestehen jeweils aus einem ca. 25 mm langen Platindraht (Ø 0,4 mm). Dieser stellt die Kontaktfläche zwischen Impulsgeber und Pflanzenoberfläche dar und ist in Form einer Öse gebogen. Der Platindraht ist beispielsweise über einen Kupferlackdraht (0 0,22 mm²) und ein Kunststoff-isoliertes Signalkabel (LiYv-Schaltlitzen, Ø 0,14 mm², 20 cm) mit einem 12-Kanal Impulsgeber verbunden. Der 12-Kanal-Impulsgeber benutzt als Spannungsquelle drei 9V-Blockbatterien, deren Ausgangsspannung auf 12 gegeneinander isolierte Einzelkanäle geführt wird. Die Ausgangsstromstärke jedes einzelnen Kanals kann zu Versuchsbeginn über Drehwiderstände und ein angeschlossenes Multimeter frei gewählt werden. Die Steuerung der zeitlichen Abfolge der DC-Impulse kann über eine handelsübliche, potentialfrei geschaltete digitale Zeitschaltuhr erfolgen, die frei definierbare Stimulationszeiträume ermöglicht. In Kombination mit dem 12-Kanal-Impulsgeber ermöglicht die Zeitschaltuhr eine automatisierte Übertragung von DC-Impulsen mit definierter Frequenz und Häufigkeit auf die Pflanzen.

Die Überwachung der Schaltprozesse während der gesamten Elektrostimulationsphase erfolgt bei der zuvor beschriebenen Versuchsanordnung über die parallele Aufzeichnung der Ausgangsspannung des 12-Kanal-Impulsgebers, wobei zusätzlich die Raumtemperatur sowie die Lichtbedingungen registriert werden. Für jede Versuchsreihe werden 3 Aufzuchtwannen mit jeweils 6 Versuchspflanzen der gleichen Charge verwendet. Die Pflanzen werden nach der Keimungsphase direkt in die Phytokammer I übertragen und dort unter Dauerlicht (vegetativ) für weitere 4 Wochen kultiviert. Die Pflanzen einer Aufzuchtwanne werden als Kontrollpflanzen verwendet und nicht elektrostimuliert. Die 2 x 6 Pflanzen der beiden verbliebenen Aufzuchtwannen werden nummeriert und mit jeweils einer Anode (+) und Katode (-) sowie Kontaktcreme entlang der Sprossachse versehen. Zuletzt werden die Elektrodenpositionen auf der Sprossachse sowie der räumliche Abstand zwischen der Anode und Katode notiert und der Versuch gestartet. Stimulationsdauer, Signalmuster und Stromstärke sind mit dem verwendeten Versuchsaufbau frei wählbar.

Um mögliche Veränderungen des Übergangswiderstands zwischen Sprossachsenoberfläche und Reizelektroden im Laufe der Stimulationsphase feststellen zu können, kann im Anschluss an jedes Experiment die Stromstärke für jede Pflanze erneut bestimmt und mit dem Ausgangswert verglichen werden. Anschließend werden die Reizelektroden entfernt und die Pflanzen für weitere 5 bis 14 Tage in Phytokammer I (Dauerlicht) kultiviert. Innerhalb dieses Zeitraums wird die Anzahl der blühinduzierten Versuchspflanzen anhand der mikroskopischen Betrachtung der Morphologie der Sprossscheitelpunkte der elektrostimulierten und nicht-elektrostimulierten Versuchspflanzen bestimmt.

### Datenauswertung

Die Ergebnisse der Voruntersuchungen, in deren Verlauf Messanlage und Elektroden auf ihre Eignung für die vorliegenden Experimente überprüft worden sind, haben gezeigt, dass APs im Unterschied zu VPs und den Verschiebungen des RPs im Verlauf von Langzeitmessungen regelmäßig nachgewiesen werden können. Ihre zeitliche Verteilung steht dabei in Beziehung zur Photoperiode und dem verwendeten Pflanzentyp (KTP oder LTP). Diese Beobachtung belegt den Zusammenhang zwischen Blühinduktion und AP-Verteilungsmuster.

Da statistische Auswertungen der Signalaufzeichnungen auf einen möglichst umfangreichen Datensatz angewiesen sind und APs regulierend auf unterschiedlichste physiologische Aktivitäten einwirken können, wird die Beschreibung der Datenanalyse vorliegend auf die Bestimmung der zeitlichen Verteilung der zahlreich auftretenden APs beschränkt. Die ermittelten AP-Signalmuster sind die Grundlage der Ausarbeitung pflanzlicher Elektrophysiogramme.

### Detektion von Aktionspotentialen

Die mit z.B. *NextView*/*NT* mit einer Abtastrate von 200 Hz gewonnenen Messwerte besitzen nach der ersten Mittelwertsbildung aus 10 Messwerten die verbleibende zeitliche Auflösung von 50 msec. Der so aufbereitete Datensatz zeigt bereits eine deutliche Akzentuierung von langsamen, niederfrequenten elektrischen Signalen. Störungen mit Frequenzen > 100 Hz werden mit dem LowPass-Filter von 100 Hz im Vorfeld ausgelöscht. Die Datensätze werden anschließend mit Hilfe einer Bild-Ausschnittsvergrößerung (=*Zoom*-Funktion) (Software *z.B. NextView*/*NT*) am Bildschirm ausgewertet. Dabei werden Veränderungen des Oberflächensummenpotentials erst dann als Aktionspotentiale gewertet, wenn alle Punkte der folgenden, erfindungsgemäß definierten AP-Kriterienliste eindeutig erfüllt.sind:
- Das Signal besitzt eine Mindestamplitude von 1 mV.
- Das Signal ist mindestens an einem der zwei Messpunkte pro Versuchspflanze durch eine deutliche Hyper- und Depolarisation gekennzeichnet.
- Das Signal ist infolge seiner Ausbreitung auf der Sprossachse mindestens an zwei Messpunkten mit Zeitverzögerung nachweisbar sein und
- weist somit auch eine klar erkennbare Ausbreitungsrichtung auf.
- Das Signal tritt nicht zeitgleich an den Ableitelektroden verschiedener Versuchspflanzen auf. Andernfalls kann davon ausgegangen werden, dass es sich nicht um ein pflanzliches Signal sondern um eine elektromagnetische Störung handelt.

Die hier aufgeführten AP-Kriterien wurden im Laufe von zahlreichen Vorversuchen entwickelt und haben sich als geeignete Erkennungsmerkmale für die zuverlässige Detektion von Aktionspotentialen bewährt.

Die Daten der z.B. mit der Chart-Software durchgeführten Messungen können routinemäßig durch die *Smoothing*-Funktion oder gleichwirkende Mittel bearbeitet und damit von etwaigen geringfügigen (< 0,5 mA) hochfrequenten Störsignalen, die z.B. durch die 50 Hz der Netzversorgung hervorgerufen werden können, befreit werden. Die *Smoothing*-Funktion verwendet für die Berechnungen den definierten Messwertbereich von 255 Messwerten. Dies entspricht einem Zeitfenster von 63,7 sec bei einer Abtastrate von 4 Hz, bzw. 1,28 sec bei 200 Hz. Das gesamte Zeitfenster wird in einen zentralen Messwert (Messwertnummer 127) und in zwei jeweils 127 Messwerte umfassende Bereiche links- und rechts vom zentralen Messwert unterteilt. Alle Messwerte erfahren, in Abhängigkeit von ihrem Abstand zum zentralen Messwert (Messwertnummer 127), eine unterschiedliche Gewichtung. Der zentrale Messwert beeinflusst den berechneten Messwert am stärksten. Die Messpunkte links- und rechts davon beeinflussen die Berechnungen mit größerem Abstand zum zentralen Messwert in zunehmend geringerem Ausmaß. Die Gewichtung der Messwerte erfolgt nach der *Barlett* Funktion. Im Anschluss an die Berechnungen wird das komplette 255 Messwerte umfassende Zeitfenster um einen Messwert nach rechts verschoben, und die Berechnung nach gleichem Schema wiederholt. Im Unterschied zu einem einfachen *moving average,* bei dem über das Zeitfenster von 255 Messwerten ein Mittelwert gebildet wird, erreicht die *Smoothing*-Funktion eine stärkere Reduktion hochfrequenter Störsignale bei gleichzeitiger Akzentuierung von langsamen Signalen mit großer Amplitude.

Im Anschluss an die Berechnungen erfolgt die Auswertung der Messwerte am Bildschirm mit Hilfe der *Zoom*-Funktion. Mit ihr können APs zuverlässig erkannt, und der Zeitpunkt und ihre Ausbreitungsrichtung genau bestimmt werden.

### Bestimmung der Ausbreitungsgeschwindigkeit der APs

Für die Bestimmung der Ausbreitungsgeschwindigkeit der APs entlang der Sprossachsen wird die zeitversetzte Detektion der APs an den Messpunkten angewendet. Mit Hilfe der Zeitdifferenz [sec] zwischen dem Auftreten des Signals an Messpunkt I und Messpunkt II kann bei bekanntem räumlichen Abstand [mm] der beiden Messpunkte die Geschwindigkeit [mm/sec] berechnet werden. Da es sich bei sämtlichen vorliegend beschriebenen Messungen um bipolare Ableitungen handelt, wird für die Bestimmung der Distanz zwischen zwei Messpunkten der mittlere Abstand der beiden + und - Pole eines Elektrodenpaares verwendet. Der Abstand der Messpunkte entlang der Sprossachse ist über die Versuchsdauer hinweg nicht konstant, sondern nimmt mit dem sigmoidalen Wachstum der Internodien stetig zu. Um den Zuwachs der Elektrodenabstände im Verlauf der Messung bei der Geschwindigkeitsberechnung der APs berücksichtigen zu können, werden die Distanzen zwischen zwei benachbarten Messpunkten zu Versuchsbeginn und zu Versuchsende bestimmt und in Beziehung zur Versuchsdauer gesetzt.

### Bestimmung der Ausbreitungsrichtung der Aktionspotentiale

Für die Bestimmung der Ausbreitungsrichtung der Aktionspotentiale entlang der Sprossachsen werden auf jeder Versuchspflanze mindestens zwei Messpunkte angebracht. Aus dem zeitlich versetzen Auftreten der Signale und der räumlichen Anordnung der Messpunkte zueinander kann die Ausbreitungsrichtung bestimmt werden. So sind sich basipetal (↓) ausbreitende APs zuerst an den oberen, acropetal (↑) gerichtete APs demgegenüber zuerst an den unteren Messpunkten nachweisbar. Zusätzlich besteht durch den Einsatz der Differenzverstärker die Möglichkeit, die Ausbreitungsrichtung der Signale auch mit einem einzelnen Messpunkt zu bestimmen: Aufgrund der Funktionsweise der Differenzverstärker werden die Eingangssignale des + und - Pols eines Messpunktes voneinander subtrahiert. Das führt dazu, dass ein von unten nach oben (acropetal) laufendes Signal zuerst am - Pol, dann am + Pol registriert, verrechnet und verstärkt wird. Breitet sich ein Aktionspotential in umgekehrter Richtung aus (basipetal), verändern sich bei der Berechnung die Signalvorzeichen: Das Signal wird jetzt zuerst mit dem + Pol und anschließend mit dem - Pol registriert. Dementsprechend erscheint ein sich basipetal ausbreitendes Signal nach der Verstärkung im Differenzverstärker als spiegelbildliche Abbildung des sich acropetal ausbreitenden Signals.

### Statistische Auswertung

Für die Beurteilung der Signifikanz der Unterschiede zwischen zwei Datensätzen kann z.B. der t-Test angewendet werden. Erfindungsgemäß werden die Unterschiede dabei ab dem 5% Niveau (Irrtumswahrscheinlichtkeit α < 0,05) als statistisch signifikant bzw. ab dem 1% Niveau (Irrtumswahrscheinlichtkeit α < 0,01) als hochsignifikant bezeichnet. Die Berechnungen können beispielsweise mit Hilfe von *Microsoft Excel* durchgeführt werden.

### Kontrolle der Blühinduktion

Um zuverlässige Aussagen über Unterschiede im elektrophysiologischen Signalmuster von vegetativen und blühinduzierten Versuchspflanzen machen zu können, werden die Apices der Versuchspflanzen am Versuchsende auf Ansätze von Blütenanlagen hin untersucht. Da durch die Blütenbildung bei den Versuchspflanzen ausgelöste morphologische Veränderungen an den Apices frühestens 5 Tage nach der Umsteuerung vom vegetativen zu reproduktivem Wachstum zuverlässig erkannt werden können, werden die Versuchspflanzen nach Abschluss jedes Experiments für 5 weitere Tage entweder mit der im Experiment verwendeten Photoperiode oder unter nicht- induzierenden Lichtbedingungen weiter kultiviert. Die Datensätze von Versuchspflanzen, deren Blühverhalten nicht mit der verwendeten Photoperiode übereinstimmt, werden von der weiteren Auswertung ausgeschlossen.

Für die morphologischen Betrachtungen der Apices werden die obersten 3 cm der Sprossachse mit einer Schere vorsichtig abgetrennt, und der Apex mit einer Pinzette von sämtlichen Deckblättern befreit. Unter dem Binokular können so anhand der Morphologie des Sprossscheitelpunkts vegetative und blühinduzierte Apices klar voneinander unterschieden werden.

### Blütenbildung in Abhängigkeit vom Pflanzenalter

Zusätzlich zu den routinemäßigen Kontrollen des Blühstatus der Versuchspflanzen frühestens 5 Tage nach Versuchsende wird für *C. rubrum* und *C. murale* eine Analyse des Blühverhaltens unter den in den Aufzuchten angewendeten vegetativen Photoperioden (Dauerlicht bzw. Photoperiode LD 4:20) durchgeführt. Daraus wurde der Prozentsatz der autoinduzierten Versuchspflanzen berechnet. Der Begriff der Autoinduktion der Blütenbildung bezeichnet Pflanzen, die trotz vegetativer Photoperiode aus der vegetativen in die reproduktive Phase mit anschließender Blütenbildung überwechseln. Ursache dafür können verschiedene äußere Stressfaktoren sein, z.B. Wasserstress, Lichtstress, aber auch die natürliche biologische Varianz des Versuchsmaterials.

Während der Aufzucht von *C. rubrum* zeigen in der 6. Woche 6 % aller Versuchspflanzen deutliche Blütenanlagen. Der Anteil autoinduzierter Versuchspflanzen nimmt bis zur 8. Woche auf 100% zu. Aufgrund dieser Beobachtungen werden sämtliche Langzeitexperimente mit *C. rubrum* im Alter von 4 Wochen gestartet und nach spätestens 11 Tagen beendet, wodurch der Anteil autoinduzierter Versuchspflanzen im Experiment auf ein Minimum reduziert werden kann.

### Ergebnisse

### Ergebnisse der Experimente mit Blättern und Einzelpflanzen

Ziel dieser Experimente war es, die infolge definierter äußerer Reize (Licht-Dunkel-Wechsel, Wasserstress, hydrostatischer Druckimpulse) auftretenden Änderungen des elektrischen Oberflächensummenpotentials entlang der Sprossachse und der Blattstiele isolierter Einzelblätter von *C. rubrum* nachzuweisen und zu katalogisieren. Die Messergebnisse wurden anschließend zur Charakterisierung der elektrischen. Signalvielfalt der Versuchspflanzen herangezogen.

### Ableitungen an isolierten Einzelblättern

Auf den Blattstieloberflächen konnten APs in unterschiedlichen Frequenzen nachgewiesen werden. APs treten dabei regelmäßig infolge von Licht-Dunkel- bzw. Dunkel-Licht-Wechseln auf, sind aber auch ohne erkennbaren äußeren Reiz während konstanter Dunkel- und Lichtphasen nachweisbar. Darüber hinaus konnte ein klarer Zusammenhang zwischen AP-Häufigkeit bzw. AP-Frequenz und dem Auftreten von physiologischem Wasserstress gezeigt werden. In ersten Untersuchungen wurden die Veränderungen des Oberflächensummenpotentials auf dem Blattstiel eines isolierten Einzelblattes von *C. rubrum* unter dem Einfluss von Wasserstress im Dauerdunkel untersucht.

In den ersten 10 Stunden der Ableitung sind auf dem Blattstiel einzelne APs mit einem zeitlichen Abstand von ca. 45 Minuten nachweisbar. Ab der ca. 10. Stunde nimmt die AP-Frequenz deutlich zu und erreicht mit fortschreitendem Wasserstress zwischen der 29. und 31. Stunde ihre höchste AP-Frequenz. Zu diesem Zeitpunkt folgen die APs in einem Abstand von ca. 2 Minuten aufeinander. Ab der 31. Stunde nimmt die Frequenz der Signalhäufigkeit wieder deutlich ab und erreicht zur 35. Stunde einen zeitlichen Abstand zwischen zwei aufeinander folgenden APs von ca. 5 Minuten. Zeitgleich sind erste Welkeschäden entlang der Blattspreite erkennbar. Nach weiteren 4 Stunden ist der Abstand der APs auf 15 Minuten angewachsen. 39,5 Stunden nach der Isolation des Blattes wurde das Lichtfeld wieder eingeschalten, wodurch eine Auslenkung des Ruhepotentials und die Ausbildung eines einzelnen APs beobachtet werden konnte. Im weiteren Verlauf der Messung treten APs nur unregelmäßig auf. Die hier vorgestellten elektrophysiologischen Ableitungen belegen, dass die Analyse der AP-Häufigkeit und AP-Frequenz ein geeignetes Mittel darstellt, um den physiologischen Zustand eines Blattes zu bestimmen.

In einem weiteren Einzelblattexperiment konnten die Beobachtungen des zuvor beschriebenen Versuchs bestätigt werden. Die Messung zeigt die Veränderung der AP-Feuerfrequenz am Blattstiel eines isolierten Einzelblattes von *C. rubrum* im Dauerdunkel. Das dargestellte Zeitfenster der Messung zeigt die Veränderung des Oberflächenpotentials 7 Stunden nachdem die Nährlösung des Einzelblattes entfernt wurde. Die deutliche Steigerung der AP-Feuerfrequenz steht im Zusammenhang mit dem zunehmenden Wasserstress des Einzelblattes. Die Blattspreite des abgeleiteten Blattes zeigte bereits zu Beginn des dargestellten Zeitfensters deutliche Welkeschäden. Die Signalamplitude, d.h. die Distanz zwischen dem Erreichen des Maximums der Depolarisation und Hyperpolarisation beträgt ca. 23 mV. Die geringste Zeitdifferenz zwischen zwei aufeinander folgenden APs beträgt ca. 9 Minuten 30 Sekunden.

In einer weiteren Versuchsserie wurden hydraulische Druckimpulse und deren Auswirkung auf das Ruhepotential der Blattstiele isolierter Einzelblätter untersucht. Hydraulische Druckimpulse, die durch das plötzliche Freisetzen von Wasser aus mechanisch verletztem Gewebe hervorgerufen werden, werden als Ursache für das Auftreten lokal begrenzter VPs diskutiert. Der Druckimpuls führt zur Ausbildung eines Variationspotentials mit deutlicher Amplitude (hier 397 mV). Nach ca. 2 h wird wieder der Ausgangswert des RP vor dem Druckimpuls erreicht. Die wiederholte Applikation von Druckimpulsen in einem ca. 18-Stunden-Zeitintervall führt zur Ausbildung von reproduzierbaren Variationspotentialen.

Zusätzliche *in situ* Ableitungen der Änderungen des Oberflächensummenpotentials über die gesamte Blattspreite haben gezeigt, dass in den Blättern so genannte "Übergang-APs" ausgebildet werden. Entsprechende Signale konnten an Blättern von *C. rubrum* sowie in Experimenten mit *Prunus persica* nachgewiesen werden. Diese "Übergang-APs" bestehen aus einem einzelnen AP mit deutlicher De- und Hyperpolarisationsphase und sind zyklisch innerhalb der ersten 60 Minuten nach einem Belichtungswechsel nachweisbar. Die zeitliche Verteilung dieser Signale ist ein wichtiges Charakteristikum vegetativer und blühinduzierter Kurz- und Langtagpflanzen.

### Ableitungen an Wurzeln

Um die räumliche Ausdehnung des elektrischen Signaltransports entlang des Pflanzenkormus von *C. rubrum* verfolgen zu können, wurden bis zu 5 Oberflächenelektroden entlang der Sprossachse und der Wurzel angebracht. Bei einer unter Trockenstress gehaltenen Pflanze konnte ca. 15 h nach Wiederbewässerung eine deutliche Zunahme der AP-Frequenz beobachtet werden. Die entlang der Wurzeloberfläche von *C. rubrum* nachgewiesen APs verlaufen zu über 80% in acropetaler (↑) Richtung. Die Ergebnisse zeigen, dass Verschiebungen des RPs aufgrund von Belichtungswechsel auch entlang der Wurzeln nachgewiesen werden können. Mit der dargestellten Messung ist die elektrische Kopplung der Wurzelorgane mit der Sprossachse für *C. rubrum* klar nachgewiesen.

### Einfluss von PEG auf das elektrische Oberflächenpotential

Um den Einfluss des osmotisch aktiven Polyethylenglycol (PEG) auf das Oberflächensummenpotential von *C. rubrum* untersuchen zu können, wurde eine 25 mM Polyethylenglycol-Lösung (PEG) (Mr 3500-4500) in 40%iger Nährlösung angesetzt und appliziert. Die Veränderung des elektrischen Signalmusters unter vegetativen Lichtbedingungen (Photoperiode LD 20:4 [h]) wurde anschließend über mehrere Tage hinweg aufgezeichnet. Bereits ca. 30 h nach Applikation der PEG / Nährlösung ist eine deutliche Steigerung der AP-Frequenz auf der Sprossachse von *C. rubrum* feststellbar. Mehr als 80% aller APs haben dabei ihren Ursprung im basalen Bereich der Sprossachse und breiten sich sowohl während der Dunkel- als auch während der Lichtphasen acropetal (↑) über die Sprossachse aus. Ihre maximale Amplitude beträgt 108 mV, der geringste zeitliche Abstand zwischen zwei aufeinander folgenden APs beträgt ca. 7 Minuten. Auf der Wurzeloberfläche konnten während dieser Zeit keine APs nachgewiesen werden. Mit dem Beginn des Auftretens der APs sind auch erste Welkeschäden an den untersten Blättern der Sprossachse feststellbar. Dies zeigt, dass auch hier AP-Frequenz und Gewebeschädigungen in einer direkten Beziehung zueinander stehen. Im Anschluss an die 4-tägige Behandlung der Pflanze mit PEG wurde die Wirkstofflösung wieder gegen eine 40%ige Nährlösung ausgetauscht. Auch wenn bereits vor diesem Flüssigkeitswechsel eine deutliche Abnahme der AP-Frequenz zu beobachten war, konnten während der Versuchsfortsetzung mit reiner Nährlösung Aktionspotentiale ausschließlich infolge von Licht-Dunkel-Übergängen nachgewiesen werden. Die mit PEG behandelte Versuchspflanze zeigt trotz vegetativer Photoperiode zum Versuchsende deutliche Blütenanlagen. Damit konnte für *C. rubrum* die von der Photoperiode unabhängige stressinduzierte Blütenbildung nachgewiesen werden.

### Signalkatalog

Für die Ausarbeitung eines Signalkatalogs, der das Spektrum der elektrischen Signalvielfalt von *C. rubrum* und *C. murale* widerspiegelt, wurden die Messergebnisse sowohl von den Langzeituntersuchungen (*C. rubrum* und *C. murale*) als auch von den Einzelexperimenten (*C. rubrum*) zusammengefasst. Dabei hat sich bereits während der Vorversuche mit *C. rubrum* gezeigt, dass eine in Abhängigkeit von der Photoperiode und dem jeweiligen Pflanzentyp stehende zeitliche Summation der Signale zu beobachten ist.

Für die detaillierte Analyse der Geschwindigkeit [mm/sec], Ausbreitungsrichtung (acropetal oder basipetal) und zeitlichen Verteilung der APs unter dem Einfluss nicht-blühinduzierender und blühinduzierender Photoperioden wurden die Datensätze aller Versuchspflanzen ausgewertet, die zu Versuchsende ein der Photoperiode entsprechendes Blühverhalten gezeigt hatten. Zusätzliche Experimente wurden an isolierten Einzelblättern von *C. rubrum* durchgeführt, um Hinweise auf deren elektrogene Signalautonomie zu gewinnen. Die dabei gewonnenen Ergebnisse wurden ebenfalls in die Ausarbeitung des Signalkatalogs einbezogen.

### Aktionspotentiale

Aktionspotentiale (APs) konnten im Rahmen der Langzeitmessungen auf den Sprossachsen von *C. rubrum* und *C*. *murale* sowie während der Einzelexperimente auf den Blattstielen von *C. rubrum* regelmäßig nachgewiesen werden. Die Ergebnisse der Langzeitexperimente mit *C. rubrum* und *C. murale* belegen eindeutig, dass die Anzahl, zeitliche Verteilung und die Ausbreitungsrichtung der APs nicht konstant sind, sondern in einem klaren Zusammenhang mit der jeweiligen Photoperiode stehen.

### Häufigkeitsverteilung der Aktionspotentiale

Im Laufe der Langzeitexperimente wurden entlang der Sprossachsen von *Chenopodium rubrum* (m = 38) und *Chenopodium murale* (m = 47) während durchschnittlich 10 Versuchstagen unter den Photoperioden LD 4:20, 12:12 und 20:4 [h] insgesamt 1805 APs detektiert und ausgewertet. Um die Zusammenhänge zwischen der absoluten AP-Häufigkeit und den verschiedenen blühinduzierenden und vegetativen Photoperioden für *C. rubrum* und *C. murale* bestimmen zu können, wurde für jeden Pflanzentyp (KTP und LTP) und jede Photoperiode die durchschnittliche AP-Häufigkeit bezogen auf eine Pflanze und eine Stunde [APs x Pflanze⁻¹ × Stunde⁻¹] berechnet. Diese liegt für *C. rubrum* (m = 17) unter der Photoperiode LD 20:4 [h] (vegetativ) bei 0,02 APs pro Pflanze und Stunde. Unter dem Einfluss der beiden blühinduzierenden Photoperioden wurden 0,17 APs pro Pflanze und Stunde (LD 12:12 [h]) bzw. 0,14 APs pro Pflanze und Stunde (LD 4:20 [h]) ermittelt. Damit liegt bei *C. rubrum* die AP-Häufigkeit vegetativ wachsender Pflanzen deutlich unter der AP-Häufigkeit photoperiodisch blühinduzierter Pflanzen.

Entsprechende Berechnungen wurden für *C. murale* durchgeführt. Unter vegetativen Lichtbedingungen (LD 4:20 [h]) treten rechnerisch 0,06 APs pro Pflanze und Stunde auf. Für die beiden blühinduzierenden Photoperioden ergeben sich 0,10 APs pro Pflanze und Stunde (LD 12:12 [h]) und 0,11 APs pro Pflanze und Stunde (LD 20:4 [h]). Demnach treten entlang der Sprossachsen der hier untersuchten Kurz- und Langtagpflanzen unter den jeweils blühinduzierenden Photoperioden deutlich mehr APs pro Pflanze und Stunde auf als unter vegetativen Lichtbedingungen. Darüber hinaus konnte gezeigt werden, dass bei *C. murale* unter blühinduzierenden Photoperioden die Häufigkeit der APs während der Dunkelphasen zunimmt. Bei *C. rubrum* ist im Vergleich zu vegetativen Lichtbedingungen eine Zunahme der APs während der Lichtphasen zu beobachten. Vergleicht man die Mittelwerte sämtlicher für *C. rubrum* und *C. murale* unter den verschiedenen Photoperioden berechneten AP-Häufigkeiten, so ergibt sich, dass bei *C. rubrum* im Vergleich zu *C. murale* mehr APs pro Pflanze nachgewiesen werden können (*C. rubrum* 0,11 APs pro Pflanze und Stunde; *C. murale* 0,09 APs pro Pflanze und Stunde).

### Ausbreitungsrichtung der Aktionspotentiale

Mit Hilfe multipler bipolarer Ableitungen und dem Einsatz geeigneter Differenzverstärker wurde im Rahmen der Langzeitmessungen bei einzelnen Versuchspflanzen die Ausbreitungsrichtung der APs entlang der Sprossachsen bestimmt und ausgewertet. Dabei hat sich gezeigt, dass sich die Aktionspotentiale bidirektional über die Sprossachsen der Langtag- und Kurztagpflanzen ausbreiten. Ihre Ausbreitungsrichtung ist dabei nicht zufällig, sondern steht in einem klaren Zusammenhang mit der verwendeten Photoperiode (siehe Figur 2).

So breiten sich 84% (n = 51) aller APs von *C. rubrum* unter vegetativen Lichtbedingungen acropetal (↑), die übrigen 16% basipetal (↓) über die Sprossachse aus. Unter den eine Blütenbildung induzierenden Photoperioden LD 12:12 oder 4:20 [h] sind dies lediglich 18% (n = 12) bzw. 15% (n = 7). Die überwiegende Mehrzahl der Signale blühinduzierter Pflanzen von *C. rubrum* breitet sich basipetal (↓) aus. Die Langtagpflanze *C. murale* zeigt im Vergleich zu *C. rubrum* die entgegengesetzte Verteilung der AP-Ausbreitungsrichtung in Abhängigkeit von, der Photoperiode. Während unter vegetativer Photoperiode LD 4:20 69% (n = 55) aller Signale eine basipetale (↓) Ausbreitungsrichtung aufweisen, treten unter den die Blütenbildung induzierenden Photoperioden LD 12:12 und 20:4 [h] nur noch 37% (n = 43) bzw. 33% (n = 21) aller APs mit basipetaler (↓) Ausbreitungsrichtung auf. Die Mehrzahl der Signale breitet sich dann überwiegend acropetal (↑) entlang der Sprossachse aus.

Die infolge der Wiederbewässerung einer Trockenstress ausgesetzten *C. rubrum* Pflanze nachgewiesenen APs zeigen zu > 80% eine acropetale Ausbreitungsrichtung. Die Ausbreitungsrichtung sowie die zeitliche Verteilung dieser APs stehen dabei nicht im Zusammenhang mit den für KTP und LTP unter verschiedenen Photoperioden ermittelten AP-Signalmustern. Die unter extremem physiologischen Stress nachgewiesenen APs müssen vielmehr als von den Blättern und der Photoperiode unabhängige Signalmuster betrachtet werden, wodurch eine Differenzierung zwischen diesen beiden AP-Signalmustertypen ermöglicht wird.

### An Belichtungswechsel gebundene APs: "Übergang-APs"

Unter dem Einfluss verschiedener induktiver und nichtinduktiver Photoperioden konnte in Langzeitmessungen von 7 bis 11 Tagen Dauer die an Licht-Dunkel- bzw. Dunkel-Licht-Übergänge gekoppelte regelmäßige Wiederkehr von APs entlang der Sprossachse von *C*. *rubrum* und *C. murale* gezeigt werden. Der zeitliche Abstand zwischen dem Auftreten dieser Signale und den Licht-Dunkel- bzw. Dunkel-Licht-Übergängen ist unabhängig vom Pflanzentyp (Kurztagpflanze oder Langtagpflanze) und der Photoperiode (vegetativ oder induzierend) und erfolgt kennzeichnend innerhalb der ersten 10 bis 60 Minuten nach einem Licht-Dunkel- bzw. Dunkel-Licht-Übergang. Diese schnellen elektrischen Potentialänderungen sind oftmals begleitet von einer ca. 60 bis 120 Minuten dauernden wellenförmigen Auslenkung des RPs. Aufgrund des klaren zeitlichen Zusammenhangs zwischen Belichtungswechseln und dem Auftreten von APs innerhalb der nächsten 60 Minuten, werden entsprechende Signale im weiteren als "Übergang-APs" bezeichnet und als eigene Signalgruppe behandelt.

"Übergang-APs" zeigen eine vom Pflanzentyp (KTP oder LTP) und der Photoperiode abhängige typische zeitliche Verteilung. Sie treten entweder infolge von Licht-Dunkel- (Licht-Aus-Signale) oder Dunkel-Licht-Übergängen (Licht-An-Signale) auf und sind aufgrund ihrer Häufigkeit und Regelmäßigkeit maßgeblich an der Entstehung der charakteristischen AP-Verteilungsmuster beteiligt, die in den Elektrophysiogrammen zum Ausdruck kommt.

Um die Regelmäßigkeit der "Übergang-APs" nachzuweisen und um den Ursprung dieser Signale in den Blättern zu belegen, wurden *in situ* Messungen über die Blattspreite von *C*. *rubrum* durchgeführt. Dazu wurde abweichend von allen anderen Messungen der Plus- und Minuspol der Oberflächenelektroden voneinander getrennt. Der Pluspol der Oberflächenelektrode wurde an der Blattspitze, der Minuspol an der Blattspreitenbasis angebracht, mit Kontaktgel abgedeckt und anschließend die Veränderung des Oberflächensummenpotentials unter dem Einfluss eines periodischen Licht-Dunkel-Wechsels (LD 4:4 [h]) aufgezeichnet. Die Messungen zeigen, dass die Blattspreite von *C. rubrum* in Abhängigkeit von Belichtungswechseln regelmäßig "Übergang-APs" ausbildet. Entsprechende Signale konnten in zahlreichen Langzeitmessungen auch entlang der Sprossachse von *C. rubrum* und *C. murale* nachgewiesen werden. Darüber hinaus zeigen *in situ* Vergleichsmessungen an *Prunus persica* die Ausbreitung typischer "Übergang-APs" von den Blattstielen auf die Seitenzweige. Die Zusammenfassung dieser Ergebnisse zeigt, dass sich die "Übergang-APs" aus den Blättern über die Sprossachse ausbreiten. Der prozentuale Anteil der "Übergang-APs" (= Summe der Licht-An- und Licht-Aus-Signale) an der Gesamtsumme sämtlicher unter einer Photoperiode nachgewiesenen APs unterstreicht die Bedeutung der hier definierten Signalgruppe. So treten bei der Kurztagpflanze *C. rubrum* während der Photoperioden LD 20:4, 12:12 und 4:20 [h] insgesamt 11%, 23% und 33% aller APs innerhalb der ersten Stunden nach einem Licht-Dunkel- bzw. Dunkel-Licht-Wechsel auf. Bei der Langtagpflanze *C. murale* sind dies während der entsprechenden Photoperioden 21%, 14% und 17%.

Bei der Kurztagpflanze *C. rubrum* treten unter den induzierenden Photoperioden LD 4:20 [h] und LD 12:12 [h] 33% (n = 88) bzw. 22% (n = 91) sämtlicher APs der jeweiligen Photoperiode innerhalb der ersten Stunde der Dunkel-Licht-Übergänge auf. Die verbleibenden 67% bzw. 78% der registrierten APs verteilen sich auf die D- und L-Phasen der jeweiligen Photoperiode. Unter vegetativen Lichtbedingungen (Photoperiode LD 20:4 [h]) fehlt bei *C. rubrum,* eine klare Aufteilung der APs in Licht-An-Signale (6%, n = 5) bzw. Licht-Aus-Signale (5%, n = 4). Bei der Langtagpflanze *C. murale* sind unter vegetativer Photoperiode LD 4:20 [h] 16% (n = 41) aller APs den Licht-An-Signalen zugehörig. Dieser Zusammenhang nimmt unter blühinduzierenden Photoperioden weiter ab und beträgt 1% (n = 4) unter der Photoperiode LD 12:12 [h] und 3% (n = 11) unter der Photoperiode LD 20:4 [h]. Im Gegensatz dazu steigt der Anteil der Licht-Aus-Signale unter blühinduzierenden Lichtbedingungen bis auf 18% (n = 59) unter der Photoperiode LD 20:4 [h] deutlich an. Während bei *C. rubrum* die Anzahl der Licht-An-Signale unter vegetativer Photoperiode reduziert ist und unter dem Einfluss blühinduzierender Photoperiode deutlich zunimmt, ist bei der Langtagpflanze *C. murale* die Zunahme von Licht-Aus-Signalen unter blühinduzierenden Photoperioden zu beobachten.

### Ruhepotential

Das Ruhepotential (RP) gibt das Oberflächensummenpotential des von der Elektrode erfassten Zellbereichs im nicht erregten Zustand der Zellen wieder. Die in der Literatur für verschiedene Pflanzenarten unter dem Einfluss periodischer Licht-Dunkel-Wechsel beschriebenen rhythmischen Veränderungen des RPs konnten auch bei *C. rubrum* und *C. murale* sowie *Arabidopsis thaliana* beobachtet werden.

### Die zeitliche Verteilung der Aktionspotentiale unter nicht-blühinduzierenden und blühinduzierenden Photoperioden

In Langzeitmessungen zwischen 7 und 11 Tagen Dauer wurden mit Hilfe von bipolaren Oberflächenelektroden die Veränderungen des elektrischen Oberflächensummenpotentials auf den Sprossachsen von *Chenopodium rubrum* (KTP) und *Chenopodium murale* (LTP) aufgezeichnet. Die ersten Messungen haben die bereits in den Vorversuchen gemachten Beobachtungen der zyklischen Wiederkehr von APs im periodischen Licht-Dunkel-Wechsel bestätigt. Aus diesem Grund beschränkt sich die Analyse der unter verschiedenen Photoperioden beobachteten elektrischen Aktivitäten auf die Auswertung der zeitlichen Verteilung der APs innerhalb der verschiedenen nicht-blühinduzierenden und blühinduzierenden Photoperioden. Die ineinander projizierten AP-Verteilungsmuster mehrerer Versuchspflanzen führt zur Entwicklung eines für jeden Pflanzentyp (KTP oder LTP) und jede Photoperiode typischen AP-Verteilungsmusters. Entsprechende Diagramme, mit denen u.a. die Häufigkeitsverteilung der APs unter experimentellen Licht-Dunkel-Wechseln wiedergeben wird, werden im Rahmen dieser Arbeit als pflanzliche Elektrophysiogramme bezeichnet.

Um Muster in der Häufigkeitsverteilung der APs erkennen zu können, wurde jede Photoperiode in Stundenblöcke unterteilt und die Summe der APs für jeden einzelnen Stundenblock aus den aufeinander folgenden Versuchstagen bestimmt. Anlass für die verwendete Gliederung der Photoperioden in Stundenblöcke war die Feststellung, dass die "Übergang-APs" mit großer zeitlicher Präzision innerhalb der ersten 60 Minuten nach einem Dunkel-Licht- bzw. Licht-Dunkel-Wechsel auftreten. Diese zeitliche Präzision wurde als Vorlage genommen und auf die weitere Datenauswertung übertragen. Die Auswertung und Darstellung der Ergebnisse beginnt für alle Photöperioden einheitlich mit der ersten Stunde der jeweiligen Dunkelphase (Licht-Aus-Signale).

Um sicherzugehen, dass die berechneten AP-Verteilungsmuster tatsächlich die durchschnittlichen AP-Verteilungsmuster der Pflanzen wiedergeben, wurde eine zweite Graphik erstellt. Diese zeigt den prozentualen Anteil der Versuchspflanzen, die in dem jeweiligen Stundenblock ihr AP-Maximum aufweisen. Eine 100% Angabe bedeutet demnach, dass bei allen untersuchten Pflanzen innerhalb des entsprechenden Stundenblocks das jeweilige AP-Maximum entsteht. Besitzt eine Versuchspflanze in zwei unterschiedlichen Stundenblöcken die gleiche maximale Anzahl an APs, führt dies in der Graphik dazu, dass die Gesamtsumme der Versuchspflanzen mit einem AP-Maximum den 100%-Wert übersteigt.

Die Gliederung der APs nach dem Zeitpunkt ihres Auftretens in APs der Licht- und Dunkel-Phasen sowie in Licht-An- und Licht-Aus-Signale wurde auch in die Auswertung der Elektrophysiogramme übernommen. Die darin enthaltenen Daten stammen ausnahmslos von Versuchspflanzen, bei denen zu Versuchsende durch mikro- und makroskopische Kontrolle das der jeweiligen Photoperiode entsprechende Blühverhalten festgestellt wurde.

### Chenopodium rubrum

Sämtliche AP-Verteilungsmuster wurden im Laufe von Langzeitmessungen von 7 bis 11 Tagen Dauer bestimmt. Dazu wurden 4 Wochen alte *C. rubrum* Pflanzen aus der Aufzucht unter Dauerlicht (vegetative Lichtbedingungen) entnommen, die Ableitelektroden auf der Sprossachsenoberfläche befestigt und die Pflanzen den verschiedenen Photoperioden LD 4:20 [h] (blühinduzierend), LD 12:12 [h] (blühinduzierend) und LD 20:4 [h] (nicht-blühinduzierend) ausgesetzt. Der Zeitpunkt des Beginns der Dunkelphase im Experiment wurde dabei frei gewählt, da während der Aufzucht keine Vorsynchronisation der Versuchspflanzen durch periodische Licht-Dunkel-Wechsel durchgeführt wurde. Die Veränderungen des Oberflächensummenpotentials wurden unter verschiedenen Photoperioden, konstanten 22°C und 70% relativer Luftfeuchtigkeit kontinuierlich aufgezeichnet. Im Anschluss an die Aufzeichnungen wurde die zeitliche Verteilung der APs auf die 24 Stundenblöcke der Photoperioden bestimmt.

### Häufigkeitsverteilung der Aktionspotentiale unter der nicht-blühinduzierenden Photoperiode LD 20:4 [h]

Für die Ausarbeitung der Elektrophysiogramme nicht-blühinduzierter Versuchspflanzen von C. *rubrum* wurden die Aufzeichnungen von insgesamt 17 Versuchspflanzen ausgewertet. Im Laufe von jeweils 10 Aufzeichnungstagen konnten dabei auf den Sprossachsen der 17 Versuchspflanzen insgesamt 87 APs nachgewiesen werden. Aus der Versuchsdauer und der Anzahl der Versuchspflanzen berechnet sich für die nicht-blühinduzierende Photoperiode LD 20:4 [h] ein Mittelwert von ca. 5 APs pro Pflanze. Die Anzahl der APs pro Pflanze liegt damit deutlich unter den Mittelwerten von 41 bzw. 24 APs pro Pflanze, die für die beiden induzierenden Photoperioden LD 12:12 [h] und 4:20 [h] bestimmt wurden. Die geringe Anzahl der APs unter vegetativen Bedingungen spiegelt sich auch in der berechneten geringen AP-Häufigkeit von 0,02 APs pro Pflanze und Stunde wieder. Die 87 nachgewiesenen APs verteilen sich dabei sowohl auf die Licht- als auch auf die Dunkelphasen der Photoperioden. Der t-Test der absoluten Häufigkeit der Aktionspotentiale aufeinanderfolgender Stundenblöcke ergibt für keinen Stundenblock eine signifikante Häufung der APs zum vorangegangenen Stundenblock (α > 0,05). Signale, die infolge von Licht-Dunkel-Wechseln (5%) und Dunkel-Licht-Wechseln (6%) auftreten, sind etwa gleich häufig. Die größte zeitliche Summation der APs ist während der 2. Stunde der Dunkelphase mit 11% (n = 10) festzustellen.

Die für *C. rubrum* unter vegetativer Photoperiode LD 20:4 [h] gefundene AP-Verteilung zeigt kein absolutes Maximum der APs in der 1. Stunde der Dunkelphase. Der zuvor dargestellten Definition folgend ist damit unter den gegebenen Bedingungen keine Akkumulation der APs als so genannte Licht-Aus-Signale gegeben. Im Vergleich zu den beiden blühinduzierenden Photoperioden LD 12:12 und 4:20 [h] zeigen sich dennoch grundlegende Unterschiede in den jeweiligen AP-Verteilungsmustern. Dazu gehört auch, dass das AP-Maximum der vegetativen Photoperiode statt in der ersten Stunde der Lichtphase in der zweiten Stunde der Dunkelphase liegt. Im Vergleich zu den Messergebnissen von *C. murale* und aufgrund der gegebenen Verteilung der APs auf Dunkel- und Lichtphasen ist trotz fehlendem AP-Maximum in der ersten Stunde der Dunkelphase eine Akzentuierung der frühen Dunkelphase feststellbar. Unter Berücksichtigung der Gesamtergebnisse wird deshalb für *C. rubrum* unter der Photoperiode LD 20:4 [h] das AP-Verteilungsmuster wie eine Akkumulation der APs zu Beginn der Dunkelphase behandelt.

Ein Zeitpunkt, zu dem eine einheitliche Akkumulation der APs der einzelnen Versuchspflanzen festgestellt werden kann, existiert im Vergleich mit den Ergebnissen der Photoperioden LD 12:12 und 4:20 [h] nicht.

### Häufigkeitsverteilung der Aktionspotentiale unter der blühinduzierenden Photoperiode LD 12:12 [h]

Insgesamt wurden die Ableitungen von 10 Versuchspflanzen ausgewertet. Während der Versuchsdauer von 10 Tagen konnten dabei auf der Sprossachse der blühinduzierten Versuchspflanzen 410 APs detektiert werden. Mit 73% (n = 296) verteilt sich zwar die deutliche Mehrheit der APs auf die Dunkelphasen der Photoperiode, dennoch treten noch 22% (n = 91) aller APs innerhalb der ersten Stunde der Licht-Phase, also als so genannte "Licht-An-Signale" auf. Diese Ansammlung von APs in der ersten Stunde der Lichtphase ist im Vergleich zur Anzahl der APs in den Stundenblöcken davor und danach hoch signifikant(α < 0,01).

Die Deutlichkeit der zeitlichen Summation der APs zum 13. Stundenblock wird dadurch unterstrichen, dass alle Versuchspflanzen innerhalb dieses Stundenblocks ihre größte Anzahl an APs innerhalb der Photoperiode aufweisen. Die für diese Photoperiode berechnete AP-Häufigkeit liegt bei 0,17 APs pro Pflanze und Stunde.

### Häufigkeitsverteilung der Aktionspotentiale unter der blühinduzierenden Photoperiode LD 4:20 [h]

Aufgrund des stark beschleunigten Wachstums der Versuchspflanzen unter der blühinduzierenden Photoperiode LD 4:20 [h] musste die Versuchsdauer von 10 auf 7 Versuchstage reduziert werden. Insgesamt konnten auf der Sprossachse der 11 ausgewerteten Versuchspflanzen 265 APs nachgewiesen werden. Wiederum treten mit ca. 66% (n = 175) die Mehrzahl der Signale während der Dunkelphase auf. Die größte Anzahl an APs pro Stundenblock entfällt mit 33% (n = 88) erneut auf die Signale der Dunkel-Licht-Übergänge der ersten Stunde der Lichtphase und ist damit hoch signifikant (α < 0,001). Auffällig ist die kontinuierliche Zunahme der AP-Häufigkeit ab der 6. Stunde der Dunkelphase bis hin zum Dunkel-Licht-Übergang. In der Lichtphase nehmen die APs wieder deutlich ab; bereits in der zweiten Stunde der Lichtphase (22. Stundenblock) sind nur noch einzelne APs nachweisbar.

Alle Versuchspflanzen (n = 10) zeigen im 21. Stundenblock das Maximum ihrer AP-Häufigkeit. Die hierfür ermittelte AP-Häufigkeit liegt bei 0,14 APs pro Pflanze und Stunde.

### Chenopodium murale

Die Aufzucht der Langtagpflanze *C. murale* erfolgte unter der vegetativen Photoperiode LD [h] 4:20. Für die Aufzeichnung der Änderungen des Oberflächensummenpotentials unter wechselnden Photoperioden wurden die Versuchspflanzen aus der Aufzucht entnommen, innerhalb von 2 h mit den Oberflächenelektroden entlang der Sprossachse bestückt und die Messungen unter 22°C und 70% relativer Luftfeuchtigkeit gestartet. Der Beginn der Lichtphasen der verschiedenen Photoperioden im Experiment wurde mit dem Beginn der Lichtphase während der Aufzucht abgestimmt. Dadurch wird die photoperiodische Vorsynchronisation der Pflanzen in die Versuchsphase übernommen. Im Anschluss an jedes. Experiment wurde das Blühverhalten der Pflanzen mikro- bzw. makroskopisch untersucht. In die Datenauswertung wurden ausschließlich die Messwerte von Versuchspflanzen übernommen, die ein der Photoperiode entsprechendes Blühverhalten zeigten.

### Häufigkeitsverteilung der Aktionspotentiale unter der blühinduzierenden Photoperiode LD 20:4 [h]

Unter dem Einfluss der blühinduzierenden Photoperiode LD 20:4 [h] treten lediglich 26%(n = 86) der APs während der Dunkelphase auf. Die verbleibenden APs verteilen sich gleichmäßig über die Lichtphase. Eine deutliche zeitliche Summation der APs ist mit 18% (n = 59) in der 1. Stunde der Dunkelphase (Licht-Aus-Signale) feststellbar. Diese Häufung ist im Vergleich zu den Stundenblöcken davor (24. Stundenblock) und danach (2. Stundenblock) hoch signifikant (α < 0,001). Insgesamt weisen 91% aller Versuchspflanzen zu diesem Zeitpunkt ihre größte Anzahl an APs innerhalb der Photoperiode auf. Die berechnete AP-Häufigkeit beträgt 0,11 APs pro Pflanze und Stunde.

### Häufigkeitsverteilung der Aktionspotentiale unter der blühinduzierenden Photoperiode LD 12:12 [h]

Insgesamt wurden unter der blühinduzierenden Photoperiode LD 12:12 [h] bei 20 Versuchspflanzen die Veränderungen des Oberflächensummenpotentials während durchschnittlich 9 Versuchstagen aufgezeichnet und ausgewertet. Von den dabei aufgezeichneten 464 APs entfällt mit 13% (n = 60) die deutliche Mehrzahl der Signale auf die Licht-Dunkel-Übergänge des ersten Stundenblocks. Die restlichen APs verteilen sich gleichmäßig über die Licht- und Dunkelphasen. 50% aller Versuchspflanzen haben im 1. Stundenblock ihre größte Anzahl an APs innerhalb der Photoperiode. Weitere 25% während des 10. Stundenblocks und 15% während des 23. Stundenblocks. Damit fällt hier die Akzentuierung des 1. Stundenblocks nicht so deutlich aus, wie bei der zuvor dargestellten Photoperiode LD 20:4 [h]. Die bei *C. murale* unter dem Einfluss der blühinduzierenden Photoperiode LD 12:12 [h] auftretende AP-Häufigkeit beträgt 0,10 APs pro Pflanze und Stunde.

### Häufigkeitsverteilung der Aktionspotentiale unter der nicht-blühinduzierenden Photoperiode LD 4:20 [h]

Die auch in der Aufzucht der Langtagpflanze *C. murale* verwendete Photoperiode LD 4:20 [h] hat in den Langzeitexperimenten von 11 Tagen Dauer zur Ausbildung von berechneten 0,06 APs pro Pflanze und Stunde geführt (n = 16). Dabei wurden 252 APs nachgewiesen, die sich mit 15% auf die letzte Stunde der Dunkelphase und 16% auf die erste Stunde der Lichtphase (Licht-An-Signale) verteilen. 50% aller Versuchspflanzen haben ihr klares AP-Maximum in der 1. Stunde der Lichtphase (Licht-An-Signale)

Der weitaus größte Anteil der APs (68%) verteilt sich über die gesamte Dunkelphase. Vergleichbar mit den Ergebnissen von *C. rubrum* unter der Photoperiode LD 4:20 [h] ist auch hier die sukzessive Zunahme der AP-Häufigkeit vom Beginn bis zum Ende der Dunkelphase feststellbar.

Die Ergebnisse der elektrophysiologischen Untersuchungen mit den Versuchspflanzen *Chenopodium rubrum* L. (KTP) und *Chenopodium murale* L. (LTP) sind in der nachfolgenden Tabelle zusammengefasst.

Ferner sind in Figur 3 die Ergebnisse zur Veränderung der zeitlichen Verteilung und der Ausbreitungsrichtung zusammenfassend dargestellt.

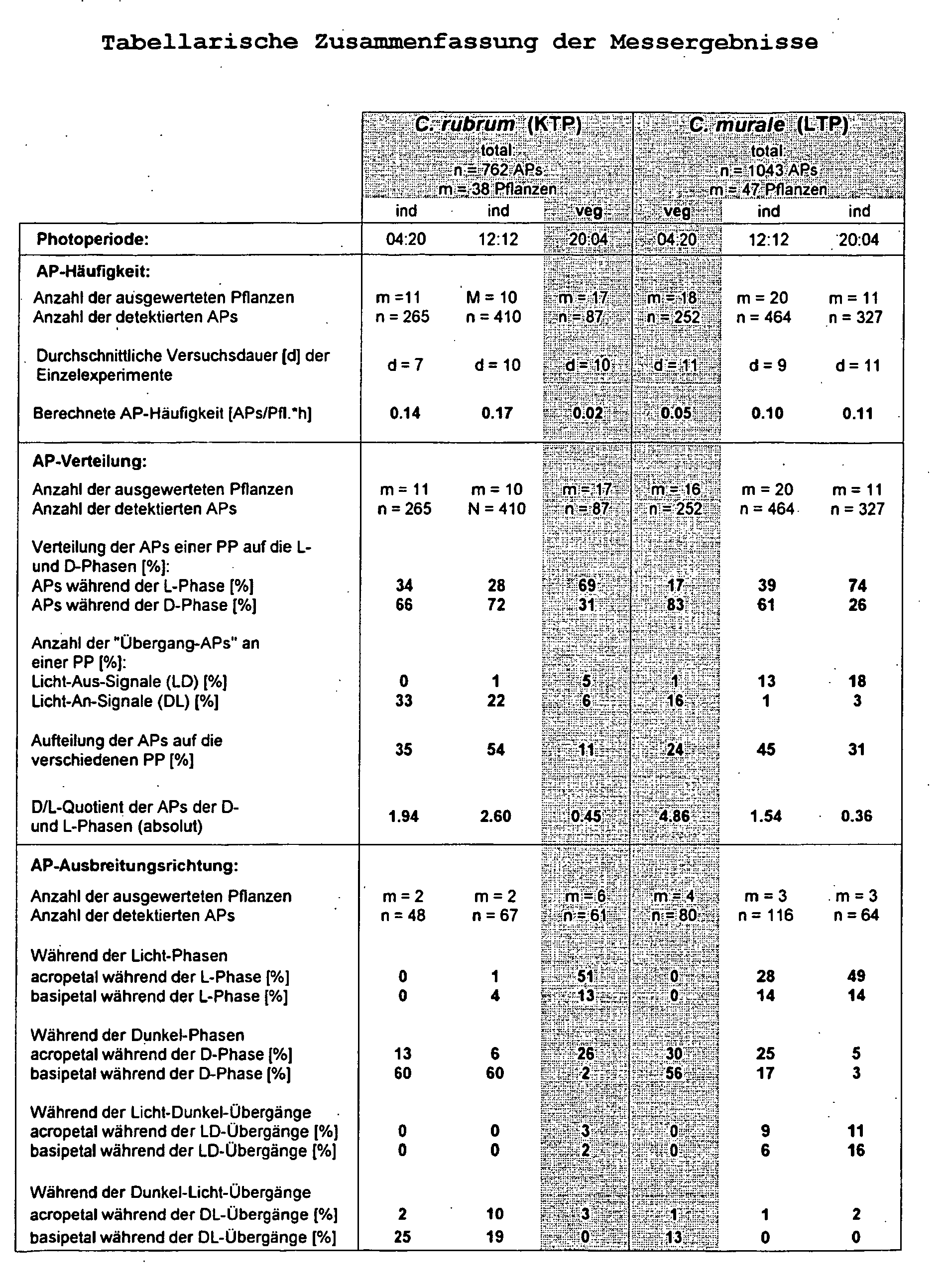

### Elektrostimulation der Blütenbildung bei Chenopodium rubrum

Im Rahmen der elektrophysiologischen Untersuchungen zur Blütenbildung wurden Elektrostimulationsversuche an *Chenopodium rubrum* (KTP) durchgeführt. Ziel der Versuche war die Induktion der Blütenbildung mit Hilfe elektrischer Signale unter nicht-blühinduzierenden Lichtbedingungen.

Insgesamt wurden 18 *C. rubrum* Pflanzen im Alter von 5 Wochen verwendet. Die für die Elektrostimulation vorgesehenen Pflanzen wurden 4 Tage vor Beginn der Elektrostimulation mit der nicht-blühinduzierenden Photoperiode LD 20:4 [h] vorsynchronisiert (s. Figur 4). Der dabei verwendete periodische Licht-Dunkel-Wechsel hat "Zeitgeber" Funktion und führt dazu, dass die endogenen Rhythmen der einzelnen Versuchspflanzen über die Belichtungswechsel miteinander synchronisiert werden.

Folglich ist zu erwarten, dass alle Versuchspflanzen mit der gleichen physiologischen Sensibilität auf die elektrischen Impulse reagieren. Anschließend wurden die Platin-Reizelektroden auf den Sprossachsen angebracht und mit Kontaktgel abgedeckt. An 6 Versuchspflanzen wurde die Anode maximal acropetal (ca. 2 cm unterhalb des Apex) angebracht, die Katode oberhalb der Seitentriebe. Bei 6 weiteren Versuchspflanzen wurde die Polarität der Reizelektroden gewechselt. Die restlichen 6 Versuchspflanzen dienten als Kontrolle und wurden nicht elektrostimuliert. Während eines definierten Zeitraums von 1,5 Stunden wurden an 7 aufeinander folgenden Tagen insgesamt 106 Einzelimpulse gesetzt. Jeder Einzelimpuls bestand aus einem Rechtecksignal mit einer Amplitude von 6 µA. Der zeitliche Abstand zwischen zwei aufeinander folgenden Signalen betrug 6 Minuten, die Einzelsignaldauer betrug 30 sec. Der Beginn der Stimulationszeiträume wurde mit dem Beginn der zuvor durchgeführten Synchronisation in der Photoperiodebox abgeglichen. Im Anschluss an die Elektrostimulationsphase wurden die Versuchspflanzen für mindestens 7 weitere Tage unter Dauerlicht in der Phytokammer I belassen. Zuletzt wurde der Blühstatus der einzelnen versuchspflanzen anhand der Morphologie der Apices mikroskopisch bestimmt.

Die mikroskopischen Auswertungen haben ergeben, dass 5 der 6 Versuchspflanzen mit apikal positionierter Anode eine auffällige Vergrößerung des Apex zeigen, wie sie im Verlauf der Blühinduktion auftritt. Die 6. Pflanze dieser Charge ist deutlich blühinduziert. Die Apices derjenigen Pflanzen, die mit umgekehrter Polarität der Reizelektroden elektrostimuliert wurden, zeigten im Vergleich mit den Apices der nicht-stimulierten Kontrollpflanzen keinen morphologischen Unterschied.

In zwei weiteren Wiederholungsexperimenten wurden insgesamt 24 Versuchspflanzen mit dem gleichen DC-Impulsmuster elektrostimuliert. Bei der mikroskopischen Überprüfung des Blühstatus der Versuchspflanzen zum Versuchsende wurde bei 14 Pflanzen die eindeutige Induktion der Blütenbildung festgestellt. Von den insgesamt 11 Referenzpflanzen zeigten 2 eine Induktion der Blütenbildung trotz vegetativer Aufzucht (Dauerlicht).

### Literatur

ADAMEC, L., MACHÁCKOVÁ, I., KREKULE, J., NOVAKOVA, M. (1989): Electric current inhibits flowering in the short-day plant Chenopodium rubrum L., J. Plant Physiol. 134, 43-46.
DAVIES, E., ZAWADZKI, T., WITTERS, D. (1991): Electrical activity and signal transmission in plants: How do plants know? In: Plant signalling, plasma membrane and change of state. Edited by C. Penel, H. Greppin. Geneva: Imprimerie Nationale. 119-137.
FROMM, J., ESCHRICH, W. (1993): Electric signals released from roots of willow Salix viminalis L ., J. Plant Physiol. 141, 673-680.
HERDE, O.; FUSS, H.; PENACORTES, H.; FISAHN, J. (1995): Proteinase inhibitor II gene expression induced by electrical stimulation and control of photosynthetic activity in tomato plants, Plant Cell Physiology 36, 737-742.
PICKARD, B. G. (1973): Action potentials in higher plants, Bot. Rev. 39, 172-201.
WAGNER, E., RUIZ FERNANDEZ, S., NORMANN, J., BONZON, M., GREPPIN, H. (1993): Chronobiology: Spatio-temporal organization of living systems. In: Some Physicochemical and Mathematical Tools for Understanding of Living Systems. Edited by H. Greppin et al. Genf: Universität Genf. 109-124.
WAGNER, E., NORMANN, J., ALBRECHTOVÁ, J. T. P., WALCZYSKO, P., BONZON, M., GREPPIN, H. (1998): Electrochemical-hydraulic signalling in photoperiodic control of flowering: Is "florigen" a frequency-coded electric signal? Flowering Newsletter, 26.
WAYNE, R. (1993): Excitability in plants cells, American Scientist 81, 140-151.
WILDON, D. C., THAIN, J. F., MINCHIN, P. E. H., GUBB, I. R., REILLY, A. J., SKIPPER, Y. D., DOHERTY, H. M., O'DONNELL, P. J., BOWLES, D. J. (1992): Electrical signalling and systemic proteinase inhibitor induction in the wounded plant, Nature, 360, 62-65.
ZIVANOVIC, B., VULETIC, M., VUCINIV, Z. (1992): Light-induced transients of bioeletric potential difference across a Chenopodium rubrum L. plant, Biochem. Physiol. Pflanz. 188, 211-219.
FRACHISSE-STOILSKOVIC, J. M., JULIEN, J. L. (1993): The coupling between extra- and intracellular electric potentials in Bidens pilosa L. Plant, Cell and Environment 16, 633-641.

## Patentansprüche

1. Verfahren zur Überwachung oder Diagnose von Pflanzenmaterialzuständen auf der Basis elektrophysiologischer Daten durch Ermittlung von Veränderungen des elektrischen Potentials im Pflanzenmaterial und Auswertung der somit erhaltenen Daten, wobei die Auswertung durch Abgleich der Daten mit elektrophysiologischen Normwerten erfolgt, welche die Frequenz, die zeitliche Verteilung, und/oder die Ausbreitungsrichtung von Aktionspotentialen betreffen.

2. Verfahren nach Anspruch 1, **dadurch gekennzeichnet, dass** die Ermittlung der Potentialveränderungen unter nicht-invasiver Verwendung von Oberflächenelektroden erfolgt.

3. Verfahren nach Anspruch 1 oder 2, **dadurch gekennzeichnet, dass** die Überwachung oder Diagnose die Feststellung des Vorhandenseins eines die Blütenbildung induzierenden Stimulus in einer Blütenpflanze betrifft.

4. Verfahren zur Manipulation pflanzlichen Materials oder zur Herbeiführung gewünschter Pflanzenmaterialzustände durch Induktion von Veränderungen des elektrischen Potentials mittels Applikation oder Auslösung elektrophysiologischer Reize unter nicht-invasiver Verwendung von Oberflächenelektroden, bei dem zur Induktion Gleichstrom eingesetzt wird und die Auswahl und Applikation des Reizes auf der Basis von elektrophysiologischen Normwerten erfolgte welche die Frequenz, die zeitliche Verteilung, und/oder die Ausbreitungsrichtung von Aktionspotentialen betreffen.

5. Verfahren nach Anspruch 4, **dadurch gekennzeichnet, dass** die Manipulation oder Herbeiführung gewünschter Zustände durch Kontrolle der Frequenz, der zeitlichen Verteilung, und/oder der Ausbreitungsrichtung von Potentialveränderungen vorgenommen wird.

6. Verfahren nach Anspruch 4 oder 5, **dadurch gekennzeichnet, dass** es die Induktion der Blütenbildung bei Blütenpflanzen betrifft.

7. Verfahren nach einem der vorhergehenden Ansprüche, **dadurch gekennzeichnet, dass** als Pflanzenmaterial einzelne Zellen, Zellverbände, Samen, Gewebe, vollständige Pflanzen und/oder Teile derselben eingesetzt werden.

8. Verfahren nach Anspruch 7, **dadurch gekennzeichnet, dass** als Pflanzenmaterial Blütenpflanzen oder Teile derselben eingesetzt werden.

9. Verfahren nach Anspruch 7 oder 8, **dadurch gekennzeichnet, dass** das Pflanzenmaterial unter Kurztag-, Langtag-, Kurzlangtag- und Langkurztagpflanzen sowie Tagneutralen ausgewählt wird.

10. Verfahren zur Bestimmung einer Kurz- oder Langtagpflanze bzw. Teilen derselben durch Ermittlung der Ausbreitungsrichtung und/oder der Frequenz und/oder der zeitlichen Verteilung elektrochemischer Potentialveränderungen und Auswertung der somit erhaltenen Daten, wobei die Auswertung durch Abgleich der Daten mit elektrophysiologischen Normwerten erfolgt, welche die Frequenz, die zeitliche Verteilung, und/oder die Ausbreitungsrichtung von Aktionspotentialen betreffen.

11. Verwendung eines Systems, welches Elektroden, einen D/A-Wandler, und eine Einheit zur Speicherung, Auswertung und/oder Steuerung elektrophysiologischer Daten sowie Normwerte für die Frequenz, die zeitliche Verteilung, und/oder die Ausbreitungsrichtung von Aktionspotentialen umfasst, zur Überwachung, Diagnose und/oder Manipulation pflanzlichen Materials.

12. Verfahren zur Herstellung einer Sammlung von Datensätzen für die Überwachung, Diagnose und/oder Manipulation pflanzlichen Materials durch Ermittlung und Speicherung elektrophysiologischer Daten zur Frequenz, Ausbreitungsrichtung und/oder zeitlichen Verteilung von Potentialveränderungen.

13. Verwendung einer Sammlung von elektrophysiologischen Datensätzen zur Frequenz, Ausbreitungsrichtung und/oder zeitlichen Verteilung von Potentialveränderungen für die Überwachung, Diagnose und/oder Manipulation pflanzlichen Materials.

## Claims

1. Process for the monitoring or diagnosis of states of plant material on the basis of electrophysiological data by detecting changes of the electric potential in the plant material and by analysing the data thus obtained, wherein the analysis is performed by comparison of the data with electrophysiological standard values relating to the frequency, the temporal distribution and/or the direction of propagation of action potentials.

2. Process according to claim 1, **characterized in that** the detection of the potential changes is performed by non-invasive use of surface electrodes.

3. Process according to claim 1 or 2, **characterized in that** the monitoring or diagnosis relates to the determination of the presence of a flower inducing stimulus in a flowering plant.

4. Process for the manipulation of plant material or for the causation of desired plant material states by inducing changes of the electric potential by application or generation of electrophysiological impulses under non-invasive use of surface electrodes, wherein DC is used for the induction and wherein the selection and application of the impulse is performed on the basis of electrophysiological standard values relating to the frequency, the temporal distribution and/or the direction of propagation of action potentials.

5. Process according to claim 4, **characterized in that** the manipulation or causation of desired states is performed by controlling the frequency, the temporal distribution and/or the direction of propagation of potential changes.

6. Process according to claim 4 or 5, **characterized in that** it relates to the induction of flowering in flowering plants.

7. Process according to any of the preceding claims, **characterized in that** single cells, cell clusters, seeds, tissues, whole plants and/or parts thereof are used as plant material.

8. Process according to claim 7, **characterized in that** flowering plants or parts thereof are used as plant material.

9. Process according to claim 7 or 8, **characterized in that** the plant material is selected from short-day, long-day, short-long- and long-short-day plants as well as from day-neutral plants.

10. Process for the determination of a short- or long-day plant or parts thereof by detecting the direction of propagation and/or the frequency and/or the temporal distribution of electrochemical potential changes and by analysing the data thus obtained, wherein the analysis is performed by comparison of the data with electrophysiological standard values relating to the frequency, the temporal distribution and/or the direction of propagation of action potentials.

11. Use of a system comprising electrodes, a D/A converter, and a unit for the storage, analysis and/or control of electrophysiological data as well as standard values for the frequency, the temporal distribution, and/or the direction of propagation of action potentials, for the monitoring, diagnosis and/or manipulation of plant material.

12. Process for the generation of a collection of data sets for the monitoring, diagnosis and/or manipulation of plant material by detecting and storing electrophysiological data relating to the frequency, the direction of propagation and/or the temporal distribution of potential changes.

13. Use of a collection of electrophysiological data sets relating to the frequency, the direction of propagation and/or the temporal distribution of potential changes for the monitoring, diagnosis and/or manipulation of plant material.

## Revendications

1. Procédé pour la surveillance ou le diagnostic des états physiologiques de matériel végétal sur la base de données électro-physiologiques déterminées par la mesure des variations du potentiel électrique dans le matériel végétal et l'analyse des données ainsi obtenues, l'analyse résultant de la comparaison des données avec des valeurs électro-physiologiques de référence, lesquelles portent sur la fréquence, la répartition temporelle et/ou le sens de la propagation des potentiels d'action.

2. Procédé selon la revendication 1, **caractérisé en ce que** la détermination des variations de potentiel est obtenue en utilisant des électrodes de surface non-invasives.

3. Procédé selon une des revendications 1 ou 2, **caractérisé en ce que** la surveillance ou le diagnostic porte sur la détection de la présence d'un stimulus inducteur de la formation de fleurs dans une plante à fleur.

4. Procédé pour la manipulation de matériels végétaux ou pour l'obtention d'états physiologiques souhaités du matériel végétal par l'induction de variations du potentiel électrique par l'application ou le déclenchement de stimulations électro-physiologiques en utilisant des électrodes de surface non-invasives, dans lequel on utilise du courant continu pour l'induction et on choisit et applique des stimuli sur la base de valeurs électro-physiologiques de référence, lesquelles portent sur la fréquence, la répartition temporelle et/ou le sens de propagation des potentiels d'action.

5. Procédé selon la revendication 4, **caractérisé en ce que** la manipulation ou le déclenchement d'états physiologiques souhaités sont effectués par le contrôle de la fréquence, de la répartition temporelle et/ou le sens de propagation des variations de potentiel.

6. Procédé selon une des revendications 4 ou 5, **caractérisé en ce qu'**il porte sur l'induction de la formation de fleurs chez les plantes à fleur.

7. Procédé selon une des revendications précédentes, **caractérisé en ce que** l'on utilise comme matériel végétal des cellules isolées, des cellules associées, des graines, des tissus, des plantes entières et/ou des parties de celles-ci.

8. Procédé selon la revendication 7, **caractérisé en ce que** l'on utilise comme matériel végétal des plantes à fleurs ou des parties de celles-ci.

9. Procédé selon une des revendications 7 ou 8, **caractérisé en ce que** le matériel végétal est choisi parmi les plantes à jour court, à jour long, à jour court-long et à jour long-court ainsi que à jour indifférent.

10. Procédé pour l'identification d'une plante à jour court ou long, respectivement des parties de celle-ci, par la détermination du sens de propagation et/ou de la fréquence et/ou de la répartition temporelle des variations de potentiels électrochimiques, et l'analyse des données ainsi obtenues, l'analyse résultant de la comparaison des données avec des valeurs électro-physiologiques de référence, lesquelles portent sur la fréquence, la répartition temporelle et/ou le sens de propagation des potentiels d'action.

11. Utilisation d'un système comprenant des électrodes, un convertisseur digital/analogique et une unité pour la mémorisation, l'analyse et/ou le pilotage des données électro-physiologiques ainsi que les valeurs de références pour la fréquence, la répartition temporelle et/ou le sens de propagation des potentiels d'action pour la surveillance, le diagnostic et/ou la manipulation de matériel végétal.

12. Procédé pour la production d'une bibliothèque de données enregistrées pour la surveillance, le diagnostic et/ou la manipulation de matériel végétal par la détermination et la mémorisation de données électro-physiologiques sur la fréquence, le sens de propagation et/ou la répartition temporelle de variations de potentiel.

13. Utilisation d'une bibliothèque de données électro-physiologiques enregistrées sur la fréquence, le sens de propagation et/ou la répartition temporelle de variations de potentiel pour la surveillance, le diagnostic et/ou la manipulation de matériel végétal.
